(19) Europäisches Patentamt
European Patent Office
Office européen des brevets

(11) EP 1 870 256 B1

(12) EUROPEAN PATENT SPECIFICATION

(45) Date of publication and mention
of the grant of the patent:
**30.10.2013 Bulletin 2013/44**

(51) Int Cl.:
**B60C 7/12** (2006.01)      **B60C 29/06** (2006.01)

(21) Application number: **06731709.9**

(22) Date of filing: **12.04.2006**

(86) International application number:
**PCT/JP2006/307773**

(87) International publication number:
**WO 2006/112335 (26.10.2006 Gazette 2006/43)**

(54) **ASSEMBLY OF TIRE AND RIM, AND HOLLOW PARTICLE**

AUS REIFEN UND FELGE BESTEHENDE ANORDNUNG UND HOHLPARTIKEL

ENSEMBLE DE PNEU ET DE JANTE, ET PARTICULE CREUSE

(84) Designated Contracting States:
**DE ES FR GB IT**

(30) Priority: **14.04.2005 JP 2005117093**

(43) Date of publication of application:
**26.12.2007 Bulletin 2007/52**

(73) Proprietor: **Bridgestone Corporation
Tokyo 104-8340 (JP)**

(72) Inventor: **TERATANI, Hiroyuki
Kodaira-shi, Tokyo
1878531 (JP)**

(74) Representative: **Waldren, Robin Michael et al
Marks & Clerk LLP
90 Long Acre
London
WC2E 9RA (GB)**

(56) References cited:
**EP-A1- 1 375 197      JP-A- 2004 243 985
JP-A- 2004 255 981      JP-A- 2005 035 545**

**Description**

TECHNICAL FIELD

The present invention relates to a tire/rim assembly capable of safely and surely attaining a minimal traveling to a place where the tire can be repaired from a puncture state after the tire is subjected to an external injury. Especially, the present invention relates to a tire/rim assembly which can be realized by a combination of a general-purpose tire and a general purpose rim and is excellent in the durability, ride comfort, fuel efficiency and generality during the usual traveling before the injury of the tire and can provide the traveling safety in the puncture at a low cost without sacrificing the productivity.

RELATED ART

For example, Patent Document 1 previously proposed by the applicant discloses a safety tire constructed by assembling a tire onto a rim and encapsulating a number of cell-containing particles each consisting of a continuous phase of a resin and a closed cell(s) kept at a pressure higher than an atmosphere pressure into a chamber defined by the tire and the rim.

In this safety tire, as the tire is injured to start the dropping of an internal pressure, the injured portion is sealed by the cell-containing particles to suppress the rapid dropping of the internal pressure, while the bending amount of the tire is increased accompanied with the dropping of the tire internal pressure to decrease the internal volume of the tire and hence the load is directly born by the cell-containing particles themselves to thereby keep a minimal tire internal pressure required for the subsequent traveling. On the other hand, the pressure inside the closed cell in the cell-containing particles existing under the tire internal pressure before the injury is existent in the tire while keeping a pressure pursuant to the above-mentioned tire internal pressure after the injury, or keeping the total volume of the cell-containing particles before the injury, so that the friction among the cell-containing particles is caused by further rotating the tire to cause self-heating while directly bearing the load by the cell-containing particles themselves, whereby the temperature of the cell-containing particles in the tire is rapidly increased. When the temperature exceeds a softening  temperature of the resin forming the continuous phase of the cell-containing particle, since the pressure inside the closed cell in the cell-containing particles is a pressure pursuant to the tire internal pressure before the injury and further such a pressure inside the closed cell rises due to the rapid rising of the temperature of the cell-containing particles, the volume of the cell-containing particles expands at once and the tire internal pressure is restored to a pressure close to that before the injury.

With respect to such a safety tire, Patent Document 2 proposes that when hollow particles each consisting of the continuous phase of the resin and the closed cell(s) are arranged in the tire, an adhesion preventing agent is arranged around the hollow particles. This adhesion preventing agent aims to modify the surfaces of the hollow particles for the purpose of preventing the formation of an integral body due to the fusion of thermally expanded hollow particles through heat generation after the internal pressure restoring function is developed by the hollow particles after the puncture.

Patent Document 1: JP-A-2003-118312
Patent Document 2: JP-A-2003-306006

Reference is also made to JP2004-255981, JP2004-243985, JP2005-35545 and EP1375197 corresponding with the preamble of claims 1 and 22.

DISCLOSURE OF THE INVENTION

PROBLEMS TO BE SOLVED BY THE INVENTION

However, the adhesion preventing agent described in Patent Document 2 is mainly attached to the surface of the hollow particles through physical adsorbing force or frictional force, so that the distribution on the surface of the hollow particle is likely to be uneven. In addition, because of the attachment through the physical adsorbing force or frictional force, the adhesion preventing agent may fall away from the surface of the hollow particles, so that sufficient fusion preventing effect may not be obtained. Especially, since a large changing input of centrifugal force is generated in the inside of the tire during the rotation, the desired effect by adding the adhesion preventing agent may not be obtained because the hollow particles and the adhesion preventing agent are separated in the tire due to a large difference of the specific gravity therebetween.

In normal high-speed traveling under an internal pressure specified by a vehicle, since the hollow particles collide with each other accompanied with the  above-mentioned changing input of centrifugal force, it is important to improve the durability against such an input in the safety tire with the hollow particles. For this end, it is desired to modify the surface of the hollow particles, but the effect of reducing the friction of the particles by the above adhesion preventing agent is not sufficient because of the above reasons, and it is difficult to expect the modification of the hollow particle surface by the adhesion preventing agent, and hence it is desired to improve the hollow particles during the normal traveling from a viewpoint of the durability.

In addition, when the adhesion preventing agent is filled in the tire together with the hollow particles, the adhesion preventing agent is concentrated into the inner peripheral surface of the tire during the rotation of the tire by the difference of the specific gravity between the adhesion preventing agent and the hollow particles and the influence of centrifugal force during the rotation. In a treading portion of a tread contacting with a road surface accompanied with the rotation of the tire, the adhesion preventing agent inside the tire is repeated by an input from the road surface so as to hopingly move from the treading side toward the inner side in the radial direction of the tire and again move back to the inner peripheral surface of the tire. As a result, the adhesion preventing agent during the movement easily causes friction with the hollow particles, so that there is a fear that the temperature of the hollow particles is raised to deteriorate the resistance of the particles to heat generation.

It is, therefore, an object of the present invention to propose means for attaining uniform distribution of a coating on hollow particle surface and strong adhesion to the surface in a tire/rim assembly filled in its tire chamber with hollow particles when the coating is applied to the hollow particle surfaces for the purpose of modifying the hollow particle surface and preventing the fusing of the hollow particles with each other.

MEANS FOR SOLVING PROBLEMS

That is, the summary of the present invention is as follows.

(1) A tire/rim assembly constructed by assembling a tire onto a rim, arranging a number of hollow particles each consisting of a continuous phase of a thermally expandable resin and a closed cell(s) in a tire chamber defined by the tire and the rim and further filling a high-pressure gas exceeding an atmospheric pressure in the tire chamber, wherein the hollow particles are obtainable by fixing a coating to at least a part of the surface of the hollow particles by heating, characterized in that the melting point Tm of the coating satisfies the following relation with respect to an expansion starting temperature Ts1 of the expandable resin particles obtained by sealing a gas component in the resin as a foaming agent of a liquid state:

$$Ts1 < Tm < Ts1 + 150 \text{ °C}.$$

(2) A tire/rim assembly according to any one of items (1) to (3), wherein the coating is provided on a full surface of the hollow particle.

(3) A tire/rim assembly according to any of items (1) to (4), wherein a fixation ratio of the coating is not less than 90 mass%, which is determined based on an amount of the coating used for covering the hollow particles and an amount of precipitates obtained by the following process according to the following equation:

$$\text{fixation ratio} = \{(\text{amount of the coating used}) - (\text{amount of the precipitates})\}/(\text{amount of the coating used}) \times 100$$

wherein the amount of the precipitates is determined by the following method:

to a separating funnel are added 300 cc of at least one kind of solvent selected from n-hexane, isopropyl alcohol, ethanol and methanol and the hollow particles with the coating weighed within a range of 2-3 g and agitated at room temperature for 1 minute and left at rest for 10 minutes to collect precipitates from the funnel, and thereafter the above-mentioned solvent is added again to adjust the amount of the solvent in the separating funnel to 300 cc, and then the above-mentioned agitation, leaving at rest and collection are repeated four times, and precipitate component resulting from five times of the above process is measured as an amount of precipitates after removing the solvent by a usual manner, from which is calculated mass percentage with respect to the original amount of the hollow particles to obtain the amount of precipitates.

(4) A tire/rim assembly according to item (5), wherein the fixation ratio of the coating is not less than 95 mass%.

(5) A tire/rim assembly according to item (5) or (6), wherein the fixation ratio of the coating is not less than 99 mass%.

(6) A tire/rim assembly according to any one of items (1) to (7), wherein a melting point Tm of the coating is higher than the expansion starting temperature Ts2 of the hollow particles.

(7) A tire/rim assembly according to item (2) or (3), wherein the hollow particles are obtained by expanding the expandable resin particles covered with the coating at a temperature above the melting point Tm of the coating.

(8) A tire/rim assembly according to any one of items (1) to (9), wherein the coating is a metal salt of an organic acid.

(9) A tire/rim assembly according to any one of items (1) to (10), wherein a gas in the hollow particle before arranged in the tire is different from a gas filled in the tire chamber.

(10) A tire/rim assembly according to item (11), wherein the gas in the hollow particle before arranged in the tire is incombustible gas and a gas inside the hollow particles in the tire/rim assembly after an application of an internal pressure is a mixture of the incombustible gas and the gas filled in the tire chamber.

(11) A tire/rim assembly according to item (12), wherein the incombustible gas is at least one gas selected from the group consisting of straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1\text{-}O\text{-}R^2 \qquad \text{(III)}$$

(wherein $R^1$ and $R^2$ are independently a monovalent hydrocarbon group having a carbon number of 1 to 5, provided that a part of hydrogen atoms in the hydrocarbon group may be substituted with fluorine atom).

(12) A tire/rim assembly according to any one of items (1) to (13) wherein the pressure in the hollow part of the hollow particles is not less than 70 % of a tire internal pressure specified by a vehicle in normal traveling use.

(13) A tire/rim assembly according to any one of items (1) to (14), wherein the continuous phase of the resin constituting a shell part of the hollow particle is an acrylonitrile-base resin.

(14). A tire/rim assembly according to item (15), wherein the acrylonitrile-base resin is a copolymer comprising at least three kinds of monomers of acrylonitrile, methacrylonitrile and methyl methacrylate, or a copolymer comprising at least three kinds of monomers of acrylonitrile, methacrylonitrile and methacrylic acid.

(15) A tire/rim assembly according to any one of items (1) to (16), wherein the pressure in the hollow part of the hollow particles is not less than an internal pressure of a tire specified by a vehicle in normal traveling use.

(16) A tire/rim assembly according to any one of items (1) to (17), wherein an average particle diameter of a group of the hollow particles arranged in the tire chamber is within a range of 40-200 $\mu$m and an average true specific gravity of the group of the hollow particles is within a range of 0.01-0.06 g/cm$^3$.

(17) A tire/rim assembly according to any one of items (1) to (18), which further comprises a pressure dropping alarm function of the tire chamber based on a vehicle speed detection by a wheel speed sensor in an anti-lock braking system and/or a pressure dropping alarm function of the tire chamber based on a system for directly measuring the pressure of the tire chamber through a pressure sensor.

(18) A tire/rim assembly according to any one of items (1) to (19), wherein a number of foamed bodies having an average bulk specific gravity under an atmospheric pressure larger than the average true specific gravity of the hollow particles are arranged in the tire chamber at a mixed state with the group of the hollow particles.

(19) A tire/rim assembly according to item (20), wherein the foamed body has substantially a spherical shape having a diameter of 1 to 15 mm or a cubic shape having a side of 1 to 15 mm and has an average specific gravity of 0.06 to 0.3 g/cc and have an closed or open cell(s).

(20) A hollow particle consisting of a continuous phase of a thermally expandable resin and a closed cell(s), wherein a pressure in a hollow part of the hollow particle is not less than the atmospheric pressure and wherein the hollow particle is obtainable by fixing a coating to at least a part of a surface of the hollow particle by heating, characterized in that the melting point Tm of the coating satisfies the following relation with respect to an expansion starting temperature Ts1 of the expandable resin particles obtained by sealing a gas component in the resin as a foaming agent of a liquid state:

$$Ts1 < Tm < Ts1 + 150\ ^\circ C.$$

(21) A hollow particle according to item (22), wherein the coating is provided on the full surface.

(22) A hollow particle according to item (22) or (23), wherein a fixation ratio of the coating is not less than 90 mass%, which is determined based on an amount of the coating used for covering the hollow particles and an amount of precipitate obtained by the following process according to the following equation:

$$\text{fixation ratio} = \{(\text{amount of the coating used}) - (\text{amount of the precipitate})\} / (\text{amount of the coating used}) \times 100$$

wherein the amount of the precipitates is determined by the following method:

to a separating funnel are added 300 cc of at least one kind of solvent selected from n-hexane, isopropyl alcohol, ethanol and methanol and the hollow particles with the coating weighed within a range of 2-3 g and agitated at room temperature for 1 minute and left at rest for 10 minutes to collect precipitates from the funnel, and thereafter the above-mentioned solvent is added again to adjust the amount of the solvent in the separating funnel to 300 cc, and then the above-mentioned agitation, leaving at rest and collection are repeated four times, and precipitate component resulting from five times of the above process is measured as an amount of precipitate after removing the solvent by a usual manner, from which is calculated mass percentage with respect to the original amount of the hollow particles to obtain the amount of precipitate.

(23) A hollow particle according to item (24), wherein the fixation ratio of the coating is not less than 95 mass%.

(24) A hollow particle according to item (24) or (25), wherein the amount of precipitates is not less than 99 mass% of the original amount of the hollow particles.

Moreover, the pressure of the tire chamber described in this specification indicates a gauge pressure (a pressure indicated in a gauge) otherwise specified.

EFFECT OF THE INVENTION

According to the present invention, it is possible to provide a tire/rim assembly developing a function capable of stably traveling over a distance required even when the pressure of the tire chamber is dropped after the injury of the tire and surely holding the above function even under a wide traveling speed condition from low speed in normal traveling to high speed.

The above effect is mainly developed by the hollow particles arranged in the tire chamber. When the coating is applied to the surface of the hollow particles according to the present invention, the uniform distribution of the coating on the surface of the hollow particles and strong covering onto the surface are attained, so that the fusing of the hollow particles with each other is surely prevented and the durability of the hollow particles can be improved. Therefore, the function inherent to the hollow particles is maintained over a period until the tire is injured, so that the high performances of the tire/rim assembly mentioned above can be guaranteed over a long time of period.

BRIEF DESCRIPTION OF THE DRAWINGS

FIG. 1 is a section view of a tire/rim assembly according to the present invention in a widthwise direction of the tire.
FIG. 2 is a view showing an example of "a valve for a tire provided with a filter" mounted on a tire/rim assembly according to the present invention and used in the filing of hollow particles and gas.

DESCRIPTION OF REFERENCE SYMBOLS

1    tire
2    rim
3    tire chamber
4    hollow particle
5    bead core
6    carcass
7    belt
8    tread
9    valve
10   innerliner layer
11   side portion
12   space surrounding particle
13   filter

## BEST MODE FOR CARRYING OUT THE INVENTION

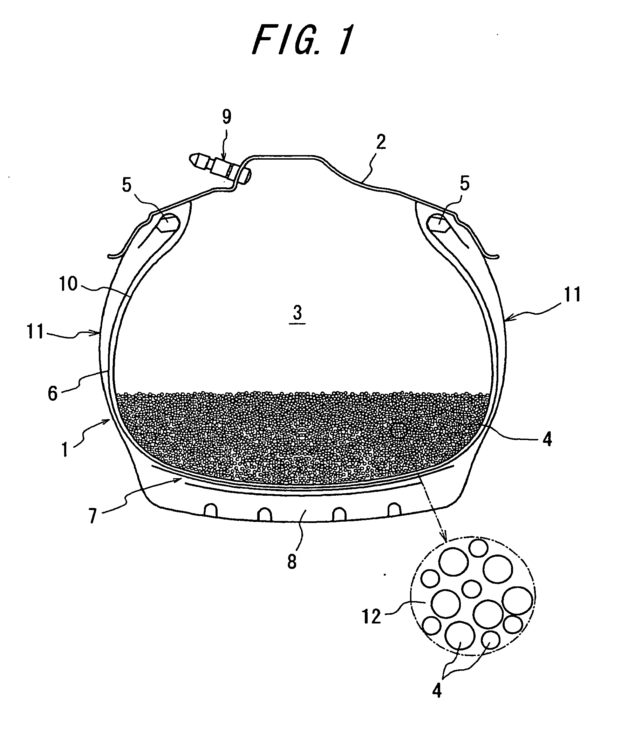

FIG. 1 is a widthwise section view of a safety tire according to the present invention.

The illustrated safety tire is constructed by assembling a tire 1 onto a rim 2 and filling a number of thermally expandable hollow particles 4 each consisting of a continuous phase of a resin and a closed cell(s) in a tire chamber 3 defined by the tire 1 and the rim 2 under pressure.

Moreover, the structure of the tire 1 is not particularly limited as long as it follows the standards for various automotive tires such as a truck tire, a bus tire, a passenger car tire and the like. That is, the present invention is a technique applicable to all safety tires comprised of a tire/rim assembly. The illustrated tire is a common automotive tire, in which a belt 7 and a tread 8 are arranged on a crown portion of a carcass 6 toroidally extending between a pair of bead cores 5 outward in a radial direction in this order.

In the figures, numeral 9 is a valve for supplying and discharging a gas to/from the tire chamber 3, numeral 10 an innerliner layer, numeral 11 a side portion and numeral 12 a space surrounding the hollow particle 4.

The hollow particle 4 is a hollow body having a closed cell(s) surrounded by substantially a sphere-shaped continuous phase of a resin and a particle size distribution with, for example, a particle size of about 10 $\mu$m - 500 $\mu$m or a sponge structural body containing a great number of small chambers made of closed cells. That is, the hollow particle 4 is a particle involving a closed cell(s) not communicated with an exterior, and the number of the closed cells may be one or more. In this specification, "an interior of the closed cell in a group of the hollow particles" collectively means "a hollow part".

Also, the feature that the particle involves the closed cell(s) means that the particle has "a shell made of a resin" for involving the closed cell(s) at a closed state. Furthermore, the continuous phase of the resin means "a continuous phase of a composition constituting the shell made of the resin". Moreover, the composition of the shell made of the resin will be mentioned later.

The hollow particle group consisting of a number of the hollow particles 4 partly bears "use internal pressure" of the tire under a normal use condition when it is filled in the inside of the tire chamber 3 together with a high-pressure gas but also is a source developing a function to restore a pressure of the tire chamber 3 lost when the tire 1 is injured. The "internal pressure restoring function" will be mentioned below.

The term "use internal pressure" indicates "a pressure value (gauge pressure value) in the tire chamber at a mounting position specified for each vehicle by automobile manufacturers".

Considering the current status on higher performances and speed-up of recent vehicles, it is important that the hollow particles arranged in the tire chamber develop the desired function, and therefore, it is required to further improve the durability of the hollow particles.

The inventors have made various studies on the actual heat generation of the hollow particles with respect to the durability, concretely heat resistance of the hollow particles and attained the further improvement of the durability (heat resistance) of the hollow particles. At first, the hollow particles are obtained by heat-expanding "expandable resin particles" as a starting material, i.e. particles formed by sealing a gas component in the resin as a foaming agent of a liquid state. In the expandable resin particles is existent an expansion starting temperature Ts1. In addition, when the hollow particles obtained by the heat-expansion are reheated from room temperature, the hollow particles start further expanding, so that an expansion starting temperature Ts2 is existent in the hollow particles.

The inventors have made various examinations on the production of the hollow particles from a number of expandable resin particles and used Ts1 as an indication of the durability until now, but found out that Ts2 is suitable as an indication of the durability.

At first, the expansion behavior is observed when the expandable resin particles are heat-expanded. Since the expandable resin particle is in the stage before the expansion, the particle diameter is extremely small as compared with that of the hollow particle and the thickness of the shell made of the resin is extremely large. Thus, the stiffness as a microcapsule is at a high state. Therefore, even if the continuous phase as a shell part made of the resin exceeds a glass transition point in the course of the heat expansion, an expansive force of the gas inside the shell part cannot overcome the stiffness of the shell part until the shell part becomes flexible to an extent by further heating. As a result, Ts 1 actually shows a value higher than the glass transition point of the shell part.

On the other hand, when the hollow particles are again heat-expanded, the thickness of the shell part in the hollow particle is extremely thin and the stiffness as a hollow body is at a low state. Therefore, at the same time as the continuous phase as the shell part exceeds the glass transition point, the expansion starts, so that Ts2 is to be lower than Ts1.

In the present invention, the expansion characteristic of the expandable resin particles is not utilized, but the further expansion characteristic of the once expanded hollow particles is utilized, so that Ts2 should be used as an indication instead of the conventional Ts1 in discussing the heat resistance.

It is important that Ts2 of the hollow particles is not lower than 90°C but not higher than 200°C. When Ts2 of the hollow particle is lower than 90°C, the hollow particles may start re-expansion before arrival in the guaranteed temperature of the tire depending on a size of a selected tire.

While, when it exceeds 200°C, even if rapid temperature rise resulted from heat generation due to friction of the hollow particles occurs in the run flat traveling after the puncture, the temperature may not reach Ts2, and hence "an internal pressure restoring function" to be aimed may not be sufficiently developed.

Therefore, Ts2 is preferable to be set within a range between 90°C and 200°C, more preferably within a range between 130°C and 200°C, further preferably within a range between 150°C and 200°C, most preferably within a range between 160°C and 200°C.

As mentioned above, by arranging the hollow particles having the expansion starting temperature Ts2 according to the above upper and lower limits in the tire chamber is surely developed the internal pressure restoring function, but also the heat resistance in high-speed traveling is improved to attain "maintenance of the internal pressure restoring function" in normal traveling.

The inventors have examined means for improving the durability to the breakage of the hollow particle due to collision of the hollow particles in addition to the heat resistance of the shell part itself of the hollow particle. As a result, there has been found that it is important to modify the surface of the hollow particle by covering the surface of the hollow particle with the coating.

That is, it has been discovered that shock and heat generation due to friction in the collision of the hollow particles resulted from the changing input of centrifugal force in the normal traveling can be mitigated by fixing the coating onto the surface of the hollow particle through heat.

As the coating are used ones being fine particles at room temperature and capable of being fixed by collision to the surface of the expandable resin particle as a starting material for the hollow particles. The coating is mixed with the expandable resin particles in a high-speed gas steam such as a cyclone, a jet mill or the like to collide with each other, whereby the expandable resin particles attached onto their surfaces with the coating can be obtained. Next, when the expandable resin particles are expanded by heating to a temperature higher than Ts1, there can be obtained the desired hollow particles fixed with the coating through heat.

Thus, when the hollow particles attached onto the surfaces with the coating are expanded by heating, the shell part made of the resin in the expandable resin particles is fused in the course of the process, so that the coating is coupled to the surface of the hollow particle, which results in the strong fixation.

The strong fixation of the coating to the surface of the hollow particle aiming at the present invention can be specifically expressed by "a fixation ratio", which is the amount of the coating fixed on the surfaces of the hollow particles with respect to the amount of the coating used.

The measurement of the above-mentioned fixation ratio will be described below. First, it is important to determine "amount of precipitates" obtained by treating the hollow particles covered with the coating in a selected solvent according to the following method.

Note:

To a separating funnel are added 300 cc of at least one kind of solvent selected from n-hexane, isopropyl alcohol, ethanol and methanol and the hollow particles with the coating weighed within a range of 2-3 g and agitated at room temperature for 1 minute and left at rest for 10 minutes to collect precipitates from the funnel, and thereafter the above-mentioned solvent is added again to adjust the amount of the solvent in the separating funnel to 300 cc, and then the above-mentioned agitation, leaving at rest and collection are repeated four times, and precipitate component resulting from five times of the above process is measured as an amount of precipitate after removing the solvent by a usual manner, from which is calculated mass percentage with respect to the original amount of the hollow particles to obtain "amount of precipitates".

Next, the "fixation ratio" can be determined according to the following equation from the above-mentioned amount of precipitates and the amount of the coating actually used for covering:

$$\text{Fixation ratio} = \{(\text{amount of the coating used}) - (\text{amount of the precipitates})\}/(\text{amount of the coating used}) \times 100$$

At this moment, the fixation ratio obtained according to the above equation is preferable to be not less than 90 mass%. That is, the "amount of precipitates" means an amount of the coating component in a free state, in other words, an amount of the coating which cannot be fixed on the surfaces of the hollow particles.

When the fixation ratio is less than 90 mass%, since the specific gravity of the coating particles in a free state is higher than that of the hollow particles, the heat generation of the hollow particles to the changing input of centrifugal force in the tire is unfavorably deteriorated. The fixation ratio is more preferably not less than 95 %, most preferably not less than 99 %.

In the fixation of the coating onto the surface of the hollow particle through heat, it is particularly advantageous that the full surface of the hollow particle is covered with the coating from a viewpoint of surface modification, but it is also effective to partially cover the surfaces of the hollow particles with the coating. In this case, it is preferable that the coating is uniformly dispersed on the surface of the hollow particle under the above fixation ratio. For this end, the expandable resin particles as a starting material for the hollow particle are mixed with the coating in a high-speed gas steam such as a cyclone, a jet mill or the like with the coating to collide with each other at a high speed, whereby the coating can be uniformly adhered onto the surfaces of the thermal expandable resin particles. By expanding the thermally expandable resin particles through heating under the desired temperature environment can be obtained the hollow particles evenly dispersed and attached with the coating.

The amount of the coating used is preferably within a range of 3-20 mass% of the amount of the hollow particles, more preferably within a range of 3-10 mass%. When the amount of the coating used is less than 3 mass%, the above effect of using the coating is hardly obtained, while when it exceeds 20 mass%, there are induced the excess increase of the specific gravity due to the attachment of extra fine particles of the coating for covering the surface of the hollow particle to the surfaces of the hollow particles and the deterioration through heat generation of the hollow particles to the changing input of centrifugal force because the extra coating particles in a free state have a specific gravity higher than that of the hollow particles as stated above.

As the coating is preferable a metal salt of an organic acid, particularly a metal salt of an acid having a carbon number of 14 or more. Concretely, lithium stearate and magnesium stearate are preferably used. That is, the metal salt of the organic acid such as lithium stearate, magnesium stearate or the like is a typical compound as a solid lubricant and can provide a good effect of reducing friction coefficient in a temperature range of not higher than the melting point of the coating.

When the thus obtained hollow particles are arranged in the tire chamber, if the melting point Tm of the coating is lower than the expansion starting temperature Ts2 of the hollow particles, there is a fear of causing the following problems. That is, when the melting point Tm of the coating is lower than Ts2, although the temperature of the hollow particles does not reach the expansion starting temperature Ts2 in the normal traveling, a part of the coating reaches Tm to cause the fusion, and hence the fluidity of the hollow particles lowers or the fusion of the hollow particles with each other is caused. As a result, the heat generation limiting speed based on Ts2 inherent to the hollow particles is significantly lowered, which will pause an impediment of exerting the above-mentioned internal pressure restoring function. Therefore, it is important that the melting point of the coating is at least not lower than Ts2.

In addition, when the melting point Tm of the coating is not lower than Ts1 and the heating temperature of the expandable resin particles in the expansion is higher than Tm, the fusion of the resin in the shell part of the expandable resin particle and the fusion of the coating occur, so that the both can be fixed more closely and strongly and it is possible to fully or partially cover the surfaces of the hollow particles with the coating. In order to meet the above, the upper limit of the melting point Tm of the coating is preferable to be a range of not higher than Ts1 + 150°C. When the melting point Tm of the coating exceeds Ts 1 + 150°C, it is required to conduct the heating to a higher temperature for expanding the expandable resin particles while fusing the coating. In this case, it is difficult to adjust the degree of expansion, and there is a fear that the hollow particles having the desired particle diameter or specific gravity may not be obtained.

Next, the basic requirement for functioning the tire/rim assembly provided in its tire chamber with the hollow particles having the improved durability as a safety tire will be described.

When the conventional pneumatic tire is traveled at a state that the pressure in the tire chamber is dropped to an atmospheric pressure, the tire is largely bent by the load and the side portion contacts with the road surface, so that the carcass member as a skeleton is fatigued by heat generation based on the friction with the road surface and the repetitive bending deformation and finally the worn injury of the side portion penetrates into the tire chamber to cause the breakage.

It is, therefore, a main object of the present invention to restore a pressure lost when the gas inside the tire chamber leaks out by the external injury by appropriately applying the minimal pressure required in subsequent traveling to the tire chamber. In the present invention, therefore, the tire/rim assembly is treated as a pressure vessel. That is, after the injured hole of the pressure vessel caused by puncture is temporally sealed with the hollow particle group arranged in the tire chamber, the hollow particles are functioned to restore the lost pressure, whereby it is attempted to achieve the above object. Therefore, it should not happen that the traveling itself after puncture leads to breakdown of the tire or the pressure vessel as in the above-mentioned conventional pneumatic tire.

That is, it is important that even if the pressure inside the tire chamber drops down to the atmospheric pressure, the above function is prematurely developed to avoid the above-mentioned breakdown of the tire and to function the tire/rim assembly as the pressure vessel. For this end, it is important to restore the pressure inside the tire chamber to "at least a pressure in which the side portion of the tire does not contact with the ground".

More specifically, the filling ratio of the hollow particles arranged in the tire chamber according to the following equation (I) is preferable to be not less than 5 vol% but not more than 80 vol%.
Note:

$$\text{Filling ratio of hollow particles} = (\text{volume value of particles}/\text{volume value of tire chamber}) \times 100 \dots\dots(I)$$

The volume value of particles is a total amount ($cm^3$) of the total volume of all hollow particles arranged in the tire chamber under an atmospheric pressure and the volume of spaces surrounding the particles and can be calculated in the following way. At first, there is determined an average bulk specific gravity of the particles under the atmospheric pressure. It is calculated, for example, by measuring a weight of particles having a known volume under the atmospheric pressure. Firstly, the particles are weighed in a measuring cylinder and vibrations are applied thereto in a ultrasonic water bath to render the packing between particles into a stable state, whereby the total volume (including the volume of spaces surrounding the particles) of the particles and the total weight of the particles are measured to calculate the average bulk specific gravity under the atmospheric pressure. That is, the average bulk specific gravity of the particles under the atmospheric pressure is as follows:

$$\text{Average bulk specific gravity of the particles under the atmospheric pressure} = (\text{total weight of the particles})/(\text{total volume of the particles}).$$

Secondly, the total weight of the particles arranged in the tire chamber is measured and divided by the above-calculated average bulk specific gravity of the particles under the atmospheric pressure, whereby the "volume of the particles" arranged in the tire can be calculated. That is,

$$\text{Volume of the particles} = (\text{total weight of the particles filled in the tire})/(\text{average bulk specific gravity of the particles under the atmospheric pressure}).$$

Moreover, the particles having the desired particle volume can be arranged in the tire even by a method wherein the particles are arranged in the tire chamber while weighing the particles in a vessel having a known volume.

Also, the volume value of the tire chamber ($cm^3$) is a value determined from the following equation (II) using the discharge amount of the filled air when only air is filled in the tire/rim assembly to adjusted to a use internal pressure (kPa) and then the filled air is discharged until the internal pressure becomes the atmospheric pressure.

$$\text{Volume value of tire chamber} = (\text{discharge amount of filled air})/(\text{use internal pressure}/\text{atmospheric pressure}) \dots\dots(II)$$

In the equation (II), the use internal pressure employs a gauge pressure value (kPa) and the atmospheric pressure value employs an absolute value (kPa) by an air gauge. That is, the atmospheric pressure is represented as 0 [kPa] in a gauge pressure, but the value of atmospheric pressure itself daily varies by the minutes and, therefore, the absolute value measured by an air gauge at the time is used. For example, when the atmosphere pressure is 1013 hPa at a certain time, 101.3 kPa is used in equation (II) as an absolute value of the atmospheric pressure.

Hereinafter, the reason why the filling ratio of the hollow particles is set to not less than 5 vol% but not more than 80 vol% is explained from a case of a normal use to a puncture state.

First, the case will be described, in which a number of the hollow particles are arranged in the tire chamber and a high-pressure gas is filled in the tire chamber so as to set the pressure inside the tire chamber to the use internal pressure. In the present invention, it is important that after the hollow particles 4 are arranged in the tire chamber 3, the high-pressure gas such as air, nitrogen or the like is filled so that the pressure of the space 10 surrounding the particles 4, i.e., the tire chamber is set to a desired use internal pressure such as an internal pressure specified by a vehicle to be mounted or the like.

When the hollow particles 4 are arranged and the gas is filled in the tire chamber 3 so as to set the pressure of the tire chamber 3 to the desired pressure, since the pressure in the hollow part of the hollow particle (pressure in the closed cell) is initially smaller than the pressure inside the tire chamber, the volume of the particles is reduced. At this point, the shape of the hollow particle is not substantially a spherical shape but is a distorted shape flattened from the spherical shape. As the traveling of the tire is started at such a state that the particles have a flattened and distorted shape, the hollow particles are apt to be easily broken by collision of the particles with each other or collision of the particles with the internal faces of the tire and the rim as compared with the case of the spherical particles. That is, when the hollow particle has a flattened and distorted shape, input due to the collision cannot be spread evenly, which results in great disadvantage from a viewpoint of the durability.

On the other hand, the hollow particles having a flattened and distorted shape are in the state of reducing their volumes due to the difference between the pressure of the hollow part and the pressure of the tire chamber. By keeping the pressure of the tire chamber (the space portion surrounding the particles) for a certain period, the pressure in the hollow part of the hollow particle or the pressure in the closed cell of the particle can be increased up to the same degree as the pressure of the tire chamber. That is, since the flattened hollow particles are deformed, force of turning to the original spherical shape acts to the shell part. Since the pressure in the hollow part of the flattened hollow particle is lower than the pressure of the tire chamber, the gas molecules in the tire chamber passes through the shell of the continuous phase made of the resin and penetrates into the hollow parts of the particles for solving the pressure difference. In addition, the hollow part of the hollow particle is a closed cell and the inside thereof is filled with a gas resulted from the foaming agent, so that the gas may differ from the gas of the tire chamber (the space portion surrounding the particles). In this case, according to not only the pressure difference but also the partial pressure difference of the gases, the high-pressure gas in the tire chamber penetrates into the hollow part of the particles until the partial pressure difference is eliminated. In this way, the high-pressure gas in the tire chamber penetrates into the hollow part of the hollow particle with the lapse of time, so that the pressure of the tire chamber is dropped by the amount penetrated into the hollow part. Therefore, the high-pressure gas is further filled for supplementing the amount penetrated into the hollow part to continuously apply the predetermine pressure, whereby there can be obtained the tire according to the present invention adjusted to a desired use internal pressure.

Thus, the pressure inside the hollow part of the hollow particle comes near to the pressure of the tire chamber (the space portion surrounding the particles) and restores the reduced particle volume, whereby the shape of the particle is restored from the flattened and distorted shape to substantially the original spherical shape. In the course of restoring the shape, the pressure inside the hollow part of the hollow particle is increased to at least 70 % of the pressure of the tire chamber, whereby the particle can be restored from the flattered shape to substantially the spherical shape, and hence the above-mentioned durability of the particles can be guaranteed.

According to the above method, since the high-pressure gas exists around the hollow particles, the load born by the hollow particles in the normal traveling can be diminished to a negligible extent, but also the particle shape in the hollow particles having their restored particle volume is restored to substantially the spherical shape and hence fatigue and breakdown applied to the particles accompanied with the repetitive deformation during the rotation of the tire can be significantly reduced, so that the durability of the particles cannot be deteriorated. The range not damaging the durability of the hollow particles is at a state that the pressure inside the hollow part of the particle is increased while restoring the particle volume under an environment that the pressure of the tire chamber is a desired high pressure such as an internal pressure specified by the vehicle to be mounted, so that the pressure inside the hollow part of the hollow particles is preferably at least 70% of the pressure of the tire chamber. Furthermore, it is more recommended that the pressure is set to a higher value such as not less than 80%, not less than 90% or not less than 100%.

In order to obtain a tire/rim assembly having the pressure inside the hollow part of the hollow particles corresponding to at least 70 % of the pressure of the tire chamber, it is sufficient that the pressure of the gas in the space surrounding the hollow particles is held at a state of increasing up to at least 70 % of the desired pressure of the tire chamber such as an internal pressure specified by the vehicle to be mounted and left for an appropriate time under such an applied pressure. Alternatively, a desired tire/rim assembly can be obtained by arranging the hollow particles in a pressure vessel other than the tire, keeping the pressure of the space surrounding the hollow particles at a state of increasing up to at least 70 % of the desired pressure of the tire chamber, maintaining such a state in the pressure vessel under the applied pressure for an appropriate time and arranging the particles at a state of increasing the pressure inside the hollow part of the hollow particles together with the surrounding air in the tire chamber.

The above-mentioned appropriate keeping time may be set in consideration of the permeability of the gas in the space to the shell part of the hollow particle of the continuous phase of the particle and the difference of the partial pressure between the gas in the hollow part of the particles and the gas in the space.

The pressure inside the hollow part of the hollow particles can be set within a desired range by appropriately selecting and adjusting the kind and the pressure of the gas filled in the tire chamber (the space portion surrounding the particles) in accordance with the above mechanism, particle shape and the process of volume change.

As stated above, by arranging the particles having the pressure inside the hollow part of the hollow particles corresponding to at least 70 % of the desired pressure of the tire chamber in the tire chamber, it is required that the pressure of the tire chamber should be restored up to such a pressure of the tire chamber that at least the side portion of the tire does not contact with the ground when the tire is traveled from a state that the pressure of the tire chamber becomes the atmospheric pressure.

Next, the mechanism of restoring the tire internal pressure will be described.

In the tire/rim assembly wherein the above-mentioned hollow particle group is arranged in the tire chamber, when the tire is injured, the high-pressure gas existing in the space 10 between the hollow particles 4 leaks out to the outside of the tire, so that the pressure of the tire chamber drops down to the same degree as the atmospheric pressure. In the course of dropping the pressure of the tire chamber, the followings occur in the tire chamber.

First, when the tire is injured start the dropping of the pressure of the tire chamber, the injured portion is sealed with a number of the hollow particles to suppress the rapid dropping of the pressure in the chamber. In the present invention, the pressure inside the hollow part of the hollow particles is defined to be at least not less than 70 % of the internal pressure of the tire specified by a vehicle during normal traveling, while the sealing capacity in the injured portion is dependent on the pressure inside the hollow part. That is, when the pressure inside the hollow part is not less than 70 %, the hollow particles can keep their substantially spherical shape as stated above, so that good fluidity and elasticity can be developed by keeping substantially the spherical shape, and hence the sealing limit in the injured portion is largely improved as compared with the case that the pressure inside the hollow part is low.

On the other hand, the bending amount of the tire is increased accompanied with the dropping of the pressure in the chamber to decrease the volume of the tire chamber. When the pressure of the chamber is further dropped, the tire is largely bent, so that the hollow particles arranged in the tire chamber are subject to compression and sheer inputs while being sandwiched between the inner surface of the tire and the inner surface of the rim.

On the contrary, the pressure inside the hollow part (pressure inside the closed cell) of the hollow particles existent under the above-mentioned use internal pressure is existent in the tire chamber while keeping the high pressure following the above-mentioned use internal pressure even after the injury, in other words, maintaining the particle volume and the pressure inside the hollow part before the injury. Therefore, as the tire is further traveled, the hollow particles themselves are self-heated through friction with each other while directly bearing the load and hence the temperature of the hollow particles in the tire chamber are rapidly raised. When the temperature exceeds the thermal expansion starting temperature of the hollow particles (Ts2: corresponding to the glass transition point of the resin), the shell of the particle starts softening. In this case, the pressure inside the hollow part of the hollow particle is a high pressure following the use internal pressure but also the pressure inside the hollow part is further increased due to the rapid rise of the temperature of the hollow particles, so that the volumes of the hollow particles expand at once and compress the gas in the space surrounding the particles, whereby the pressure of the tire chamber can be restored to such a pressure of the tire chamber that at least the side portion of the tire does not contact with the ground.

When the pressure inside the hollow part of the hollow particles is set to a high pressure capable of causing thermal expansion according to the above mechanism, the function of restoring the internal pressure can be developed. That is, in order to restore the pressure of the tire chamber up to a tire internal pressure not causing the contact of the side portion with the ground, it is important that the hollow particles wherein the pressure inside the hollow part is at least 70 % of the use internal pressure are arranged in the tire chamber at a filling ratio of not less than 5 vol% but not more than 80 vol%. The reason will be described below.

When the filling ratio of the hollow particles is less than 5 vol%, the sealing of the injured portion can be conducted without trouble, but the absolute amount of the hollow particles is lacking, so that it is difficult to sufficiently restore the internal pressure to a pressure level not causing the contact of the side portion with the ground. While, when the filling ratio of the hollow particles exceeds 80 vol%, the heat generation is caused through the friction of the particles during the high-speed traveling in normal use depending on the tire, and hence the hollow particles expand with exceeding the expansion starting temperature (Ts2) and there is a possibility that the function of restoring the internal pressure as a main function of the present invention is lost. The heat generation of the particles during the high-speed traveling in normal use will be described later.

In order to surely develop the above-mentioned function of restoring the internal pressure, it is important to surely seal the injured part before the development of the internal pressure restoring function. If the sealing of the injured portion is insufficient, the restored pressure leaks out from the injured portion, so that the pressure obtained by the internal pressure restoring function only temporally contributes to the subsequent traveling performance and there is a fear that the traveling performance after the injury cannot be guaranteed. Since the hollow particles are particles having a low specific gravity and excellent elasticity owing to the hollow structure, when the tire is injured and the gas in the space surrounding the hollow particles starts leaking through the injured portion, the hollow particles immediately pack in the injured portion along the flow of the leaked gas of the space and seal the injured hole of the injured portion instantly. As stated above, the function of sealing the injured portion with the hollow particles is an essential function for supporting the internal pressure restoring function of the present invention.

As stated above, in the tire/rim assembly filled with the particles according to the present invention, the friction of the hollow particles is caused by the volume reduction of the tire chamber and the increase of the bending amount of the tire accompanied with the dropping of the internal pressure after puncture, which results in the rapid temperature rise of the particles and the restoring of the internal pressure through the expansion of the particles, so that the safety traveling after the puncture can be realized.

By the way, the friction between the hollow particle in the tire/rim assembly is slightly generated even in the normal traveling. However, when the traveling speed is not more than 100 km/h, the generated friction heat itself is so small and is released to the exterior during the traveling to keep the heat balance.

However, in a high speed region over 150 km/h or under such an intense heat environment that the temperature of the exterior is extremely high, the releasing of heat to the exterior is at a lacking state for the increase of the generated friction heat, so that the temperature environment of the hollow particles may be significantly deteriorated. When such a condition is continued over a long time, the temperature of the hollow particles exceeds the expansion starting temperature (Ts2), and hence the particles are expanded, which may cause "loss of the above internal pressure restoring function " in the puncture.

The inventors have made various studies in order to solve this problem and found novel hollow particles capable of preventing the "loss of the internal pressure restoring function" due to the heat generation of the hollow particle group during high-speed traveling to conduct normal traveling at higher speed.

That is, when the tire is rotated at a high speed, centrifugal force is generated in accordance with the speed. Similarly, the hollow particle group arranged in the tire chamber is subjected to centrifugal force. This centrifugal force is proportional to the weight of the particles, proportional to square of the speed and in inverse proportional to the radius of the tire. In addition, a certain bending is generated by applying the load to the tire, and the region contacting with the ground is a planar state parallel to the road surface, so that such a region has not a curvature and the centrifugal force becomes approximately zero. Therefore, in the tire/rim assembly rotating while bearing the load, the hollow particles are placed under "repetitive changing input of centrifugal force" that they are subjected to the centrifugal force as mentioned above in the region not contacting with the ground, while release the centrifugal force just in entering the ground contacting region.

Accordingly, it is preferable to suppress the particle weight in the hollow particle group arranged in the tire chamber as far as possible. That is, the hollow particles are preferable to be selected from ones having an average true specific gravity as small as possible. Also, it is preferable that as the filling ratio of the hollow particles to the volume of the tire chamber is selected a small filling ratio as far as possible in the afore-mentioned range of "filling ratio capable of developing the sufficient internal pressure restoring function up to a pressure level not causing the contact of the side portion with the ground".

When the filling ratio of the hollow particles is less than 5 vol%, it is difficult to obtain a sufficient internal pressure restored to a pressure level not causing the contact of the side portion with the ground depending on the tire. While, when the filling ratio of the hollow particles exceeds 80 vol%, the hollow particles are expanded with exceeding the expansion starting temperature due to the heat generation through friction of the particles during high-speed traveling in normal use depending on the tire, and there is a possibility that the internal pressure restoring function as a main function of the present invention is lost. Therefore, the preferable range of the filling ratio of the hollow particles is not less than 5 vol% but not more than 60 vol%, and more preferably not more than 70 vol%, not more than 60 vol% and not more than 50 vol%.

In addition, the average true specific gravity of the hollow particles is preferably within a range of 0.01-0.06 g/cc. When it is less than 0.01 g/cc, the durability of the hollow particles in normal traveling is deteriorated, and the above-mentioned "internal pressure restoring function" may be lost in normal use. While, when it exceeds than 0.06 g/cc, the changing input of centrifugal force during high-speed traveling in normal use is increased and the amount of the heat generation is disadvantageously increased.

The hollow particle group arranged in the tire chamber has a distribution in the true specific gravity and each of the particles dose not have the  same true specific gravity value. As the reason are mentioned the unevenness of thermal history in the expansion by heating and the retention of the expanded gas resulted from the foaming agent. In the process that each of "the expandable resin particles" as a starting material for the hollow particles is expanded by heating to form a hollow particle, if the thermal history in the heating is uneven, hollow particles sufficiently expanded by the thermal history are coexistent with hollow particles which stop the expansion on the way because the thermal history is less. In "the expandable resin particles", ones having a smaller particle diameter are relatively thin in the thickness of the continuous phase as a shell of the particles (indicating a scurf skin enclosing the foaming agent), and ones having a larger particle diameter are thick in the thickness of the shell. Even if the thermal history is equal in the heating, the retention of the expanded gas in the hollow particle generated by heating depends on the absolute thickness of the shell. Therefore, the "expandable resin particles" having a smaller particle diameter before expansion are low in the retention of the expanded gas because the shell is thin, and hence they form hollow particles having a low expansion coefficient with a high true specific gravity. Inversely, the "expandable resin particles" having a larger particle diameter are high in the retention of the expanded gas because the shell is thick, and hence they form hollow particles having a high expansion coefficient, which can grow to a larger particle diameter and the true specific gravity becomes low. In general, hollow particles obtained by expansion of expandable composition such as a microcapsule or the like have a distribution in the particle diameter at a state after expansion, wherein there is a relation that hollow particles having a smaller particle diameter are high in the true specific gravity and hollow particles having a larger particle diameter are low in the true specific gravity.

Therefore, the sufficiently expanded hollow particles are low in the true specific gravity, while the hollow particles stopping the expansion on the way are high in the true specific gravity. When the hollow particle group having such a true specific gravity distribution is arranged in the tire chamber, it is subjected to centrifugal force depending on the speed during traveling under the normal internal pressure. At this time, the particles having a higher true specific gravity are subjected to larger centrifugal force as compared with the particles having a lower true specific gravity. Therefore, the group of particles having a lower true specific gravity is existent in the vicinity of the inner surface side of the wheel in the tire/rim assembly, while the group of hollow particles having a higher true specific gravity becomes gradually existent toward a direction separated from the rotating center. As a result, the group of particles having a highest true specific gravity is existent in the innerliner surface side beneath the tread, so that the particle groups have a slope in the true specific gravity from the inner surface side of the wheel toward the innerliner surface side beneath the tread (outward in a tire rotating radial direction).

When the tire is placed under the above "repetitive changing input", the group of hollow particles having a higher true specific gravity generates a large inertial force as compared with the group of hollow particles having a lower true specific gravity under a changing input in the ground-contacting region. Therefore, the group of hollow particles having a higher true specific gravity moves so as to push through the coexisting "group of hollow particles having a lower true specific gravity", so that the difference of motion energy resulted from the difference of relative inertial force between the particles having low true specific gravity and the particles having high true specific gravity generates extra friction heat between the particles, and as a result, the heat buildup of the particles as a whole may be deteriorated. That is, the cause of the heat generation in the hollow particles is a relative difference of inertial force between the particles having high true specific gravity and the particles having low true specific gravity and a generation of friction heat based on the movement of these particles.

In order to suppress the generation of friction heat, as means for reducing the relative difference of inertial force is first mentioned means of narrowing the distribution width of the true specific gravity in the hollow particles. For example, in the hollow particles having a certain average true specific gravity, the particles are removed at the same volume ratio from the side of the higher true specific gravity (the side of smaller particle diameter) and the side of the lower true specific gravity (the side of larger particle diameter), whereby the distribution width of the true specific gravity can be narrowed without changing the average true specific gravity, so that it is possible to suppress the above relative difference of inertial force to thereby suppress the heat generation of the hollow particle groups as a whole.

Secondly, by directly removing only the particle group having the higher specific gravity (the side of smaller particle diameter) as a heat generation source is lowered the average true specific gravity while narrowing the distribution of the true specific gravity, whereby not only the relative difference of inertial force but also the level of inertial force itself can be suppressed to further suppress the heat generation of the hollow particle groups as a whole.

The average particle diameter of the hollow particles is preferably within a range between 40 $\mu$m and 200 $\mu$m. When the average particle diameter of the hollow particles is less than 40 $\mu$m, the above distribution of the true specific gravity becomes wider and the heat buildup is deteriorated by the relative difference of inertial force between the group of particles having the higher true specific gravity and the group of particles having the lower true specific gravity and the generation of friction heat based on the motion of these groups. While, when the average particle diameter of the hollow particles exceeds 200 $\mu$m, the particles are selectively broken from the side of the larger particle diameter under situation that the particles collide with each other in the normal traveling or under a situation that the hollow particle group directly bears the load during traveling when the pressure of the tire chamber becomes the atmospheric pressure due to the puncture, there is a fear of causing a disadvantage that the desired traveling performance after the puncture cannot be obtained.

As the gas constituting the hollow part (closed cell) of the hollow particle is mentioned at least one selected from the group consisting of nitrogen, air, straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1 - O - R^2 \qquad (III)$$

(wherein $R^1$ and $R^2$ are independently a monovalent hydrocarbon group having a carbon number of 1 to 5, provided that a part of hydrogen atoms in the hydrocarbon group may be substituted with fluorine atom). In addition, the gas to be filled in the tire chamber may be air, but if the gas in the above-mentioned particle is not a fluoride, a gas containing no oxygen such as nitrogen, inert gas or the like is preferable from a viewpoint of the safety.

Moreover, the method of producing the hollow particles having a closed cell(s) is not particularly limited, but there is generally a method wherein "expandable resin particles" are prepared by using a foaming agent and then subjected to an expansion by heating. As the foaming agent may be mentioned a means for utilizing a vapor pressure such as a high-pressure compressed gas, a liquefied gas or the like, a means for utilizing a heat-decomposable foaming agent which produces a gas through heat decomposition, and so on. Especially, a large number of the heat-decomposable foaming agents have a characteristic of producing nitrogen, so that particles formed by properly controlling the reaction of the expandable resin particles obtained by foaming such a foaming agent mainly contain nitrogen in their cells. The heat-decomposable foaming agent is not particularly limited, and may preferably include dinitrosopentamethylene tetramine, azodicarbon amide, paratoluene sulfonyl hydrazine and derivatives thereof and oxybisbenzene sulfonyl hydrazine.

Next, the method of obtaining the "expandable resin particles" for the hollow particles by utilizing the vapor pressure such as high-pressure compressed gas, liquefied gas or the like will be described. In case of forming the continuous phase of the resin constituting the particle, there is a method wherein at least one selected from the group consisting of nitrogen, air, straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1 - O - R^2 \qquad\qquad (III)$$

(wherein $R^1$ and $R^2$ are independently a monovalent hydrocarbon group having a carbon number of 1 to 5, proved that a part of hydrogen atoms in the hydrocarbon group may be substituted with fluorine atom) is liquefied as a foaming agent under a high pressure and emulsion-polymerized while dispersing into a reaction solvent. As a result, there can be obtained "expandable resin particles" in which the above-mentioned gas component is sealed as a foaming agent of a liquid state in the above resin continuous phase, which can be heat-expanded to obtain the desired hollow particles.

In order to apply the minimal internal pressure by the hollow particles at a state that the pressure of the tire chamber is dropped due to injury, it is important that the gas filled in the hollow part of the hollow particles under the given pressure does not leak out to the outside of the particle, or in other words, that the continuous phase of the resin corresponding to the shell part of the hollow particles has a property hardly permeating the gas. That is, it is important that the resin constituting the continuous phase is made of a material having a low gas permeability, specifically at least one of acrylonitrile copolymer, acrylic copolymer and vinylidene chloride copolymer. These materials have a flexibility as the hollow particle to the input by the tire deforming and are especially effective in the present invention.

Particularly, it is preferable to apply any one of acrylonitrile copolymer, acrylic copolymer and vinylidene chloride copolymer to the continuous phase of the hollow particles. More specifically, the monomer constituting the polymer is one selected from acrylonitrile, meta- acrylonitrile, methyl methacrylate, methacrylic acid and vinylidene chloride. Preferably, at least one selected from acrylonitrile/methacrylonitrile/ methyl methacrylate terpolymer and acrylonitrile/methacrylonitrile/methacrylic acid terpolymer is advantageously adaptable. These materials are small in the gas permeability coefficient and hardly permeate the gas, so that the gas in the hollow part of the hollow particles hardly leaks out toward the exterior and the pressure in the hollow part can be appropriately maintained.

In the continuous phase of the hollow particle, it is recommended that the gas permeability coefficient at 30 °C is not more than 300 x $10^{-12}$ (cc·cm/cm$^2$·s·cmHg), preferably the gas permeability coefficient at 30 °C is not more than 20 x $10^{-12}$ (cc·cm/cm$^2$·s·cmHg), more preferably the gas permeability coefficient at 30 °C is not more than 2 x $10^{-12}$ (cc·cm/cm$^2$·s·cmHg). Because, considering that even when the gas permeability coefficient of the innerliner in the normal pneumatic tire is not more than 300 x $10^{-12}$ (cc·cm/cm$^2$·s·cmHg), the tire has a sufficient internal pressure keeping function, as for the continuous phase of the particle, the gas permeability coefficient at 30 °C is not more than 300 x $10^{-12}$ (cc·cm/cm$^2$·s·cmHg). However, at such a level of the gas permeability coefficient, the internal pressure should be compensated once in three to six months, so that from a viewpoint of the maintenance, it is recommended that the gas permeability coefficient is not more than 20 x $10^{-12}$ (cc·cm/cm$^2$·s·cmHg), preferably not more than 2 x $10^{-12}$ (cc·cm/cm$^2$·s·cmHg).

When the hollow particles are arranged in the tire chamber according to the present invention, in order to enhance the sealing function to the tire injured portion when the tire is injured, it is effective to take a means for mixing a number of foamed bodies having an average bulk specific gravity larger than the average true specific gravity of the hollow particles with the hollow particle group. Specifically, by adding a number of the foamed bodies each having substantially a spherical shape with a diameter of 1 to 15 mm or a cubic shape with a side of 1 to 15 mm and having closed or open cells, having an average specific gravity of 0.06 to 0.3 g/cc and a bulk specific gravity larger than the average true specific gravity of the particle can be extended the developing period of the internal pressure restoring function to increase the traveling performance after the tire is injured.

Since the hollow particles are high in the fluidity owing to substantially the spherical shape, they can be easily arranged in the tire chamber from an entrance having a small inner diameter such as a valve or the like. On the other hand, when the tire is injured, the hollow particles try to blow out from the injured portion to the outside of the tire with the high-pressure gas in the tire chamber to gather around the inner surface of the injured portion. However, the injured pathway from the inner surface of the injured portion to the outer peripheral surface of the tire is not straight but greatly complicated, so that the particles entering from the injured portion at the inner surface of the tire are blocked on the pathway, and hence a number of the hollow particles gather in the inner surface of the injured portion at a compressed state and the injured portion is temporally sealed. At this moment, the temporally sealing means a state that the hollow particles themselves do not leak but the gas in the spaces surrounding the particles gradually leaks.

At this moment, depending on a shape or a size of the injured portion, temporal sealing by only the particles may be insufficient. In this case, by adding a number of the above foamed bodies can be improved the sealing level as follows.

That is, since centrifugal force depending on the speed is generated in the tire chamber during the traveling, under such a centrifugal force, the foamed bodies having a higher bulk specific gravity are unevenly existent in the innerliner side of the tire, while the hollow particles having a lower true specific gravity are unevenly existent in the side near to the rotating center as compared with the foamed bodies. At this state, even if the tire is subjected to an injury to an extent not sealed by only the particles, since a number of the foamed bodies are unevenly existent in the neighborhood of the innerliner face at the inner surface of the tire, the foamed bodies are immediately adhered to the inner surface of the injured hole in the injured portion for the purpose of blowing out to the outside of the tire, whereby the injured portion is sealed, so that the presence of the foamed bodies is very effective.

In particular, it is a very effective means that the foamed body is a foamed body made of a thermoplastic urethane having open cells, because it is high in the compressibility and is easily adhered to the form of the injured hole and hence a large injured hole can be greatly made complicated and fined by the foamed bodies, whereby the complicated and fined gas pathway can be changed into the form most suitable for sealing by the hollow particles.

It is preferable that the tire/rim assembly according to the present invention is provided with either or both of a tire chamber pressure dropping alarm function based on a vehicle speed detection by a wheel speed sensor of an anti-lock braking system and a tire chamber pressure dropping alarm function based on a direct measurement system of the tire chamber pressure by a pressure sensor.

That is, in the present invention, as the traveling is continued at a state that the pressure of the tire chamber is dropped due to puncture, the internal pressure is restored by the above-mentioned mechanism, so that a driver may not notice the injury of the tire according to circumstances. However, since the tire itself is injured by puncture, the continuous traveling may cause breakdown of the tire, which is very risky. Therefore, it is preferable to use the above-mentioned tire internal pressure dropping alarm function simultaneously.

In addition, it is preferable to have a tire valve for filling the hollow particles and the gas. The tire valve comprises a filter capable of blocking the hollow particles in the tire chamber and passing only the gas to the outside of the tire chamber. When the punctured tire is repaired according to the present invention, by attaching such a tire valve can be disposed the hollow particles in the tire chamber through only one valve, so that a universal rim having only one valve hole can be used as it is. In addition, with respect to natural dropping of the pressure in the tire chamber during traveling after repairing, it is possible to prevent "leakage of the hollow particles during gas filling work" and to realize the maintenance of the pressure in the tire chamber simply.

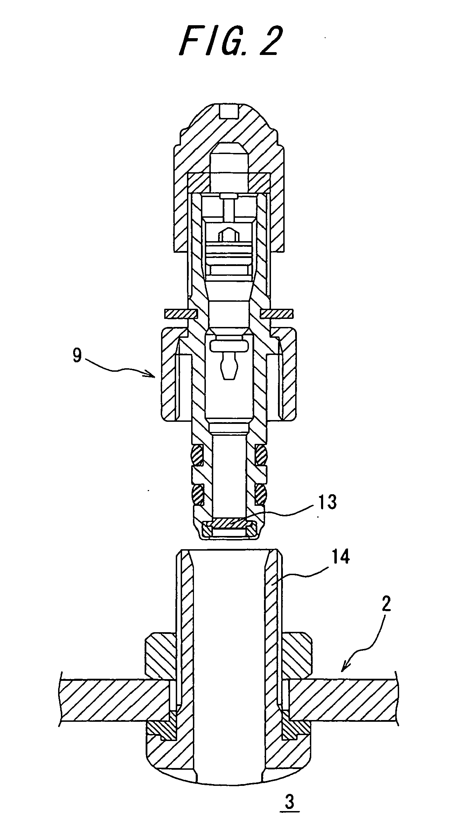

As such a tire valve, as shown in FIG. 2, a valve 9 for supplying and discharging gas, which is mounted onto a valve attaching opening 14 of the rim 2 has a structure provided with a filter 13 made of, for example, a nonwoven fabric.

### EXAMPLES

There is provided a tire/rim assembly for passenger car formed by mounting a tire having a size shown in Table 1 onto a rim having a size shown in Table 1. The tire 1 follows a general structure for this tire kind and size. Next, a vehicle is selected according to such a tire size and the tire/rim assembly is mounted on a left front wheel of the vehicle by applying a load corresponding to 4 persons and filling a high pressure air is filled so as to adjust the pressure in the tire chamber to 200 kPa. At this moment, the pressure of the tire chamber is gradually dropped while keeping the state of applying the load to determine the pressure value of the tire chamber when the side portion of the tire contacts with the road surface or when the inner surfaces of the innerliner contact with each other. This pressure value of the tire chamber is defined as "RF traveling limit internal pressure value".

Next, the pressure of the tire chamber in each tire is adjusted to a use internal pressure at a state that the load is not applied, and the high-pressure gas is discharged from the tire chamber to determine the amount of the gas discharged, whereby the volume of the tire chamber in each tire is calculated. The calculated results are shown in Table 1. The measurement of the volume in the tire chamber of the tire/rim assembly is carried out according to the following procedures.

[Method of measuring volume of tire chamber]

Procedure 1: Air at room temperature is filled to the tire/rim assembly to adjust a predetermined internal pressure

(use internal pressure) $P_2$ while keeping a state of applying no load. In this state, the objective tire chamber volume at $P_2$ is defined as $V_2$.

Procedure 2: A tire valve is open and air in the tire chamber is flowed into an integrating flower while discharging to the atmospheric pressure $P_1$ to measure the discharging amount of the filled air $V_1$. Moreover, DC DRY gas meter DC-2C, intelligence counter SSF made by Shinagawa Seki Co., Ltd. is used as the integrating flower.

By using each of the above measured values, the tire chamber volume $V_2$ at the use internal pressure $P_2$ can be determined ccording to the following equation:

$$\text{Tire chamber volume value} = \text{(amount of the filled air discharged)/(use internal pressure/atmospheric pressure)} \quad ..... \text{ (II)}$$

In the equation (II), the use internal pressure uses a gauge pressure value (kPa) and the atmospheric pressure value uses an absolute value (kPa) by using an air gauge.

Furthermore, the hollow particles having various specifications shown in Table 1 are applied to the tire chamber of the above tire/rim assembly to obtain an assembly of the tire and the rim shown in Table 1.

In Comparative Examples except for Comparative Example 1 and in Examples, the hollow particles are obtained according to procedures shown in Tables 2 and 3 by attaching or fixing various coatings shown in Tables 2 and 3 on the surfaces of hollow particles or thermal expandable resin particles in the method and conditions shown in Tables 2 and 3, and applied to the tire chamber. Moreover, the measurement of the precipitate amount in the hollow particles with the coating shown in Table 1 is as mentioned above.

Next, nitrogen is filled in the above tire/rim assembly so as to adjust to the use internal pressure. The particle volume restoring behavior is previously investigated based on an investigation method mentioned later, whereby the retention time corresponding to the objective internal pressure inside the hollow particles is calculated, and then the preparation of the tire/rim assembly to be evaluated is carried out by keeping the pressure of the tire chamber at room temperature or in a warming chamber kept at 45°C to increase the pressure inside the hollow part of the hollow particles to thereby restore the particle volume.

The method of calculating the retention time suitable for increasing the pressure inside the hollow part of the hollow particles is as follows

There is first provided a transparent and cylindrical pressure container made of acrylate resin having an inner volume of about 1000 cc and a constant inner diameter at its cross section, and the hollow particles according to the present invention are fully filled in the container while applying vibrations to the container by means of an ultrasonic water bath or the like. Then, the gas to be filled in the tire chamber is filled in the container up to the desired use pressure such as an internal pressure specified by the mounted vehicle. As the pressure is increased, the volume of the particles in the container is reduced, so that the height of the portion filled with the hollow particles inside the container (hereinafter referred to as the hollow particle height) lowers. When the internal pressure of the container reaches the target pressure, after vibrations are applied to the container by means of an ultrasonic water bath or the like, the container is statically left for 5 minutes. When the hollow particle height in the container is stable, the hollow particle height is measured and defined as "hollow particle height in pressurization start: H1". Furthermore, the above-mentioned use pressure is continuously applied to measure "hollow particle height after a certain time: Hx".

Next, while the above pressure is applied, the hollow particle height is measured every a certain time to record the change with the lapse of time, and the measurement is continued until the hollow particle height is not changed and the final "stable hollow particle height: H2" is measured. From the above, the particle volume restoring ratio is calculated according to the following equation:

$$\text{Particle volume restoring ratio(\%)} = [(Hx-H1)/(H2-H1)] \times 100$$

Based on the above measurement results, the time required up to the target volume restoring ratio is calculated, and the gas are filled at the desired pressure in the tire/rim assembly provided with the hollow particles and the restoring treatment of the whole particle volume is applied according to the above calculated retention time, whereby the pressure inside the hollow portion of the hollow particles is increased.

Furthermore, the pressure ratio shown in Table 1 for the hollow portion of the hollow particles arranged in the tire chamber is measured and checked as follows.

[Method of checking the pressure level in the hollow part]

There is provided a target tire wherein the hollow particles are arranged in the tire chamber to keep the desired use internal pressure $P_2$ for a certain period. When the valve is opened by arranging a filter in the valve, the hollow particles stay in the tire chamber and only the high-pressure gas is discharged. Thereafter, once the pressure of the tire chamber is set to the atmospheric pressure, the gas is again filled so as to adjust to a pressure $P_{50\%}$ corresponding to 50 % of $P_2$, and then the tire valve is opened to discharge air in the tire chamber to the atmospheric pressure $P_1$ and flow into an integrating flower to measure the air discharging amount $V_{50\%}$. The volume value of the space surrounding the particles V at the pressure $P_{50\%}$ is calculated according to the following equation:

$$\text{Volume value of space surrounding particles V (cm}^3\text{)} = [\text{Value of air discharging amount (cm}^3\text{)}]/[\text{Internal pressure value } P_{50\%} \text{ (kPa)/Atmospheric pressure } P_1 \text{ (kPa)}]$$

Similarly, volume of space surrounding the particles at each pressure level such as $P_{20\%}$, $P_{70\%}$, $P_{80\%}$ and $P_{90\%}$ is calculated. If the pressure inside the hollow portion does not reach the pressure of the tire chamber, the volume of the hollow particles is reduced, so that the volume of the space surrounding the particles is increased. Therefore, the above measurement is started from a sufficient low pressure level, and the pressure level starting the increase in the volume of the space surrounding the particles is defined as a pressure level inside the hollow portion of the hollow particles.
Furthermore, after the above method of checking the pressure level of the hollow portion is conducted, when the pressure of the tire chamber is the use internal pressure ($P_{100\%}$), the volume value of the space surrounding the particles V is determined by the same method according to the following equation:

$$\text{Volume value of space surrounding particles under } P_{100\%} \text{ V (cm}^3\text{)} = [\text{Value of air discharging amount } V_{100\%} \text{ (cm}^3\text{)}]/[\text{Internal pressure value } P_{100\%} \text{ (kPa)/Atmospheric pressure } P_1 \text{ (kPa)}]$$

By calculating the difference between the volume of the tire chamber and the volume value of the space surrounding the particles V is obtained the volume of the hollow particles in the tire chamber under the use internal pressure.
The kinds of composition constituting the continuous phase of the hollow particle in Table 1 are shown in Table 2. The hollow particles are formed by heat-expanding the expandable resin particles shown in Table 2. In Examples, the heat-expansion is carried out by attaching the coating to the expandable resin particles. The measurement results of the average particle diameter and the average true specific gravity of the thus obtained particle group are shown in Table 3. The hollow particles shown in Table 3 are arranged in each tire chamber at the filling ratio shown in Table 1.
The method of measuring the average true specific gravity of the hollow particles is as follows.

[Method of measuring average true specific gravity]

The value of the average true specific gravity of the particles is usually measured by a liquid substitution method (Archimedean method) as a usual method using isopropanol. Even in the present invention is used this method.
Also, the method of measuring the average particle diameter and the particle diameter distribution of the hollow particles is as follows.

Instrument: Laser diffraction particle size distribution measurement device, HELOS&RODOS system, made by Sympatec Gmbh,
Measurement condition: 2S-100ms/DRY
Dispersive pressure: 2.00bar, Feed: 50.00%, Rotation: 60.00%
Shape factor: 1.00

The measurement is carried out under the above condition to adopt the following measurement value.
That is, the volume basis average particle diameter is defined as an average particle diameter value (D50 value) in the present invention.
Furthermore, the method of measuring the thermal expansion starting temperature Ts1 of each expandable resin particle and the re-expansion starting temperature Ts2 of each hollow particle is as follows.

[Method of measuring thermal expansion starting temperature of particles]

The amount of the thermal expansion displacement is measured under the following conditions, and the temperature when the amount of the displacement rises is defined as the thermal expansion starting temperatures Ts1 and Ts2 in Table 2.

Instrument: PERKIN-ELMER 7Series

"Thermal Analysis System"

Measurement condition: Temperature rising rate 10°C/min, Temperature in start of measurement 25°C, Temperature in end of measurement 220°C
Measurement physical quantity: Measuring the amount of the expansion displacement by heating

At first, a high-speed heat generation drum test is performed by using the obtained tire/rim assembly. That is, the above-mentioned tire/rim assembly adjusted to the value of internal pressure shown in Table 1 is attached to a drum testing machine set at the test environmental temperature of 38°C and traveled at a speed of 300 km/h for 1 hour while applying a load shown in Table 1. After the traveled tire is left and cooled down to room temperature, the pressure of the tire chamber is adjusted to the use internal pressure and the volume value of the space surrounding the particles after the traveling is measured by the above-mentioned method. Furthermore, after all the hollow particles are completely removed from the tire chamber, the pressure of the tire chamber is again adjusted to the use internal pressure and the volume value of the tire chamber after the traveling is measured by the above-mentioned method. The difference between the volume value of the tire chamber after the traveling and the volume value of the space surrounding the particles after the traveling is determined to obtain the volume of the hollow particles in the tire chamber after the traveling under the use internal pressure.
Finally, "volume retention ratio of hollow particles" is calculated as an indication for the durability of the hollow particles according to the following equation. The "volume retention ratio of hollow particles" is excellent closer to 100% and is acceptable to be not less than 95%.

$$\text{"Volume retention ratio of hollow particles"} = (\text{volume of hollow particles}$$
$$\text{after traveling/volume of hollow particles before traveling}) \times 100$$

In addition, the chamber pressure of another tire/rim assembly for evaluation is adjusted to the use internal pressure and traveled on the drum at a speed of 90 km/h over a distance of 50000 km while applying a load shown in Table 1, whereby the history of traveling is added.
Thereafter, a payload corresponding to 4 persons is applied to a passenger car having a class corresponding to each tire size, and the tire to be evaluated is mounted on a left front wheel to measure an axial weight at the left front wheel of the car. Next, four nails each having a diameter of 5.0 mm and a length of 50 mm are inserted into the inside of the tire from the tread surface of the assembly. After the confirmation that the pressure of the tire chamber is dropped to the atmospheric pressure, the run flat traveling is performed on a circuit course at a speed of 90 km/h to continuously measure the temperature of the particles in the tire chamber and the chamber pressure to thereby investigate the developing state of the internal pressure restoring function.
Moreover, a pressure sensor monitoring the pressure of the tire chamber is installed on the inner surface of the rim in the tire/rim assembly to be evaluated and a signal of pressure data measured is transmitted by using a usually used telemeter to receive in a receiver installed in the vehicle to be tested, whereby the traveling of 100 km at maximum is performed while measuring the change of the pressure. A case that the pressure value of the tire chamber based on the development of the internal pressure restoring function in the run flat traveling exceeds the above-mentioned "RF traveling limit internal pressure value" as "pressure value of the tire chamber when the side portion of the tire contacts with the road surface or when the inner surfaces of the innerliner contact with each other" is judged to be acceptable. These investigated results are also shown in Table 1.
In Table 1, Comparative Example 1 is an example using no coating and shows the hollow particle volume reduction of not less than 10 vol%.

Comparative Example 2 is an example that Li salt of stearic acid is directly added to the hollow particles and shows that the fixation to the surface of the hollow particle is bad and the precipitate amount is large. Therefore, the coating does not sufficiently function on the surface of the hollow particle, which results in the lower volume retention of the hollow particles.

On the other hand, Invention Examples 1 and 2 are examples that the coating is fixed to the surfaces of the expandable resin particles and expanded at a temperature exceeding the melting temperature Tm of the coating to obtain the hollow particles. The basic function is satisfied, but Tm is lower than Ts2 and a part of the hollow particles is melted accompanied with the rise of the temperature during traveling to lose the fluidity of the hollow particles, and hence the volume reduction is somewhat observed.

Invention Examples 3 and 4 are examples that the coating having Tm higher than Ts2 is fixed to the surfaces of the expandable resin particles and expanded at a temperature of not lower than Tm to obtain the hollow particles, and show the good durability and the high volume retention of the hollow particles.

Invention Example 5 is an example that the coating having Tm higher than Ts2 is fixed to the surfaces of the expandable resin particles and expanded at a temperature lower than Tm to obtain the hollow particles, and shows that the performance is satisfied, but the precipitate is slightly generated and the volume reduction of the hollow particle is slightly observed.

Invention Example 6 is an example that the coating having Tm higher than Ts2 is fixed to the surfaces of the expandable resin particles and expanded at a temperature higher than Tm to obtain the hollow particles, and shows the good durability and the high volume retention of the hollow particles.

Invention Example 7 is an example that the coating having Tm higher than Ts2 is fixed to the surfaces of the expandable resin particles and expanded at a temperature lower than Tm to obtain the hollow particles, in which the amount of the durability improving agent used is increased as compared with Invention Example 5. However, the fixation of the coating becomes lower than that of Invention Example 5, and hence the precipitate is generated and the volume reduction of the hollow particles is slightly observed.

Table 1-1

Evaluation tire contents and evaluation results

| | Comparative Example 1 | Comparative Example 2 | Invention Example 1 | Invention Example 2 |
|---|---|---|---|---|
| <Tire/rim assembly> | | | | |
| Tire size | 235/35R19 | 235/35R19 | 235/35R19 | 235/35R19 |
| Tire speed mark | Y | Y | Y | Y |
| Rim size | 8JJ-19 | 8JJ-19 | 8JJ-19 | 8JJ-19 |
| Load applied to a left front wheel of the selected vehicle (kN) | 5.13 | 5.13 | 5.13 | 5.13 |
| Pressure of the tire chamber specified by the selected vehicle (kPa) | 230 | 230 | 230 | 230 |
| RF traveling limit internal pressure value (kPa) | 35 | 35 | 35 | 35 |
| Gas filled in the tire chamber | Nitrogen | Nitrogen | Nitrogen | Nitrogen |
| Volume of the tire chamber (cm$^3$) | 22750 | 22750 | 22750 | 22750 |
| <Hollow particles> | | | | |
| Kind of the hollow particle | A1 | A2 | B1 | C1 |
| Expansion starting temperature of the expandable resin particle Ts1 ($^\circ$C) | 155 | 155 | 155 | 155 |
| Expansion starting temperature of the hollow particle ($^\circ$C) | 150 | 150 | 150 | 150 |
| Kind of the coating | no | Li salt of stearic acid | Zn salt of stearic acid Zn | Ca salt of stearic acid |
| Amount of the coating used (mass%) | 0 | 10 | 10 | 10 |
| Melting point of the coating ($^\circ$C) | - | 220 | 128 | 147 |
| Method of adding the coating | - | Direct addition to the hollow particles | Heating after fixing to the expandable resin particles | same as Invention Example 1 |
| Expansion environmental temperature of the expandable resin particle ($^\circ$C) | 260 | 260 | 260 | 260 |
| Fixation ratio of the coating (mass%) | 0 | 1 | 98 | 99 |
| nt of precipitates from the hollow particles covered with the coating (mass%) | 0.0 | 9.9 | 0.2 | 0.1 |
| Particle volume value (including the space surrounding the particles) (cm$^3$) | 6825 | 6825 | 6825 | 6825 |
| Filling ratio (vol%) | 30 | 30 | 30 | 30 |
| Retention pressure under the high pressure in the tire chamber (kPa) | 230 | 230 | 230 | 230 |
| Retention time under the high pressure in the tire chamber (day) | 7 | 7 | 7 | 7 |
| Retention environmental temperature under the high pressure ($^\circ$C) | 45 | 45 | 45 | 45 |
| Ratio of the hollow portion pressure to the tire chamber pressure (%) | not less than 100 | not less than 100 | not less than 100 | not less than 100 |
| <High-speed heat generation drum test> | | | | |
| Pressure of the tire chamber (kPa) | 200 | 200 | 220 | 220 |
| Load (kN) | 5.13 | 5.13 | 5.13 | 5.13 |
| Volume of the hollow particles before traveling (cm$^3$) | 4230 | 4240 | 4230 | 4230 |
| Volume of the hollow particles after traveling (cm$^3$) | 3760 | 3830 | 4020 | 4030 |
| Volume retention of the hollow particle (%) | 88.9 | 90.3 | 95.0 | 95.3 |
| Judgement | unacceptablel | unacceptable | acceptable | acceptable |
| <Run flat traveling test> | | | | |
| Pressure value of the tire chamber (kPa) | 58 | 61 | 63 | 65 |
| Traveling distance (km) | 100 | 100 | 100 | 100 |
| Judgement | unacceptable | unacceptable | acceptable | acceptable |

EP 1 870 256 B1

Table 1-2

Evaluation tire contents and evaluation results

| | Invention Example 3 | Invention Example 4 | Invention Example 5 | Invention Example 6 | Invention Example 7 |
|---|---|---|---|---|---|
| <Tire/rim assembly> | | | | | |
| Tire size | 235/35R19 | 235/35R19 | 235/35R19 | 235/35R19 | 235/35R19 |
| Tire speed mark | Y | Y | Y | Y | Y |
| Rim size | 8JJ-19 | 8JJ-19 | 8JJ-19 | 8JJ-19 | 8JJ-19 |
| Load applied to a left front wheel of the selected vehicle (kN) | 5.13 | 5.13 | 5.13 | 5.13 | 5.13 |
| Pressure of the tire chamber specified by the selected vehicle (kPa) | 230 | 230 | 230 | 230 | 230 |
| RF traveling limit internal pressure value (kPa) | 35 | 35 | 35 | 35 | 35 |
| Gas filled in the tire chamber | Nitrogen | Nitrogen | Nitrogen | Nitrogen | Nitrogen |
| Volume of the tire chamber (cm$^3$) | 22750 | 22750 | 22750 | 22750 | 22750 |
| <Hollow particles> | | | | | |
| Kind of the hollow particle | D1 | E1 | F1 | F2 | G1 |
| Expansion starting temperature of the expandable resin particle Ts1 (°C) | 155 | 155 | 155 | 155 | 155 |
| Expansion starting temperature of the hollow particle (°C) | 150 | 150 | 150 | 150 | 150 |
| Kind of the coating | stearic acid Li | stearic acid Li | stearic acid Na | stearic acid Na | stearic acid Na |
| Amount of the coating used (mass%) | 10 | 5 | 10 | 10 | 20 |
| Melting point of the coating (°C) | 220 | 220 | 280 | 280 | 280 |
| Method of adding the coating | Same as Invention Example 1 | Same as Invention Example 1 | Same as Invention Example 1 | Same as Invention Example 1 | Same as Invention Example 1 |
| Expansion environmental temperature of the expandable resin particle (°C) | 260 | 260 | 260 | 300 | 260 |
| Fixation ratio of the coating (mass%) | 99 | 98 | 62 | 99 | 44 |
| Amount of precipitates from the hollow particles covered with the coating (mass%) | 0.1 | 0.1 | 3.8 | 0.1 | 11.2 |
| Particle volume value (including the space surrounding the particles) (cm$^3$) | 6825 | 6825 | 6825 | 6825 | 6825 |
| Filling ratio (vol%) | 30 | 30 | 30 | 30 | 30 |
| Retention pressure under the high pressure in the tire chamber (kPa) | 230 | 230 | 230 | 230 | 230 |
| Retention time under the high pressure in the tire chamber (day) | 7 | 7 | 7 | 7 | 7 |
| Retention environmental temperature under the high pressure (°C) | 45 | 45 | 45 | 45 | 45 |
| Ratio of the hollow portion pressure to the tire chamber pressure (%) | No less than 100 | No less than 100 | No less than 100 | No less than 100 | No less than 100 |
| <High-speed heat generation drum test> | | | | | |
| Pressure of the tire chamber (kPa) | 200 | 200 | 200 | 200 | 200 |
| Load (kN) | 5.13 | 5.13 | 5.13 | 5.13 | 5.13 |
| Volume of the hollow particles before traveling (cm$^3$) | 4240 | 4230 | 4230 | 4230 | 4240 |
| Volume of the hollow particles after traveling (cm$^3$) | 4240 | 4230 | 4090 | 4220 | 4060 |
| Volume retention of the hollow particle (%) | 100.0 | 100.0 | 96.7 | 99.8 | 95.8 |
| Judgement | Pass | Pass | Pass | Pass | Pass |
| <Run flat traveling test> | | | | | |
| Pressure value of the tire chamber (kPa) | 65 | 65 | 65 | 61 | 63 |
| Traveling distance (km) | 100 | 100 | 100 | 100 | 100 |
| Judgement | Pass | Pass | Pass | Pass | Pass |

21

Table 2

Contents of the expandable resin particle

| Kind of the expandable resin particle | A | B | C |
|---|---|---|---|
| Kind of continuous phase composition [*1] | AN/MAN/MA terpolymer | Same as A | Same as A |
| Kind of the foaming agent [*2] | methylperfluoropropylether | Same as A | Same as A |
| Expansion starting temperature Ts1 (°C) | 155 | Same as A | Same as A |
| Kind of the coating | no | Stearic acid Zn | Stearic acid Ca |
| Melting temperature (°C) | — | 128 | 147 |
| Additive amount [*3] | — | 10 | 10 |
| Additive method | — | Fixing by airflow collision | Fixing by airflow collision |

| Kind of the expandable resin particle | C | D | E | F |
|---|---|---|---|---|
| Kind of continuous phase composition [*1] | Same as A | Same as A | Same as A | Same as A |
| Kind of the foaming agent [*2] | Same as A | Same as A | Same as A | Same as A |
| Expansion starting temperature Ts1 (°C) | Same as A | Same as A | Same as A | Same as A |
| Kind of the coating | Stearic acid Li | Stearic acid Li | Stearic acid Na | Stearic acid Na |
| Melting temperature (°C) | 220 | 220 | 280 | 280 |
| Additive amount [*3] | 10 | 5 | 10 | 20 |
| Additive method | Fixing by airflow collision | Fixing by airflow collision | Fixing by airflow collision | Fixing by airflow collision |

*1 AN:acrylonitrile, MAN:methacrylonitrile, MA:methacrylic acid

*2 methylperfluoropropylether is mixture of iso structure and normal structure

*3 ratio of weight of the coating to weight of the hollow particles covered with the coating

## Table 3

### Contents of the hollow particle

| | | A1 | A2 | B1 | C1 | D1 |
|---|---|---|---|---|---|---|
| Kind of the hollow particle | | A | A | B | C | D |
| Expandable resin particle as a starting material | Expansion starting temerature Ts2 (°C) | 150 | 150 | 150 | 150 | 150 |
| | Expansion Environmental Temperature (°C) | 260 | 260 | 260 | 260 | 260 |
| Coating post-added to the hollow particles | | none | Stearic acid Li | none | none | none |
| | Additive amount (mass%)*1 | - | 10 | - | - | - |
| | Deposit Amount (mass%)*2 | 0 | 9.9 | 0.2 | 0.1 | 0.1 |
| | Fixation ratio of the coating (%) | 0 | 1 | 98 | 99 | 99 |
| | Average particle diameter (um) | 105 | 105 | 102 | 103 | 103 |
| Average true specific gravity (g/cc) | | 0.029 | 0.032 | 0.033 | 0.033 | 0.032 |

| | | E1 | F1 | F2 | G |
|---|---|---|---|---|---|
| Kind of the hollow particle | | E | F | F | G |
| Expandable resin particle as a starting material | Expansion starting temerature Ts2 (°C) | 150 | 150 | 150 | 150 |
| | Expansion Environmental Temperature (°C) | 260 | 260 | 300 | 260 |
| Coating post-added to the hollow particles | | no | no | no | no |
| | Additive amount (mass%)*1 | - | - | - | - |
| | Deposit Amount (mass%)*2 | 0.1 | 3.8 | 0.1 | 11.2 |
| | Fixation ratio of the coating (%) | 98 | 62 | 99 | 44 |
| | Average particle diameter (um) | 103 | 104 | 108 | 103 |
| Average true specific gravity (g/cc) | | 0.031 | 0.032 | 0.031 | 0.034 |

*1 ratio of weight of the coating to weight of the hollow particles covered with the coating
*2 ratio of weight of the deposit to weight of the hollow particles covered with the coating

Claims

1. A tire/rim assembly constructed by assembling a tire (1) onto a rim (2), arranging a number of hollow particles (4) each consisting of a continuous phase of a thermally expandable resin and a closed cell(s) in a tire chamber (3) defined by the tire (1) and the rim (2) and further filling a highpressure gas exceeding an atmospheric pressure in the tire chamber (3), wherein the hollow particles (4) are obtainable by fixing a coating to at least a part of the surface of the hollow particles by heating, **characterized in that** the melting point Tm of the coating satisfies the following relation with respect to an expansion starting temperature Ts1 of the expandable resin particles obtained by sealing

23

a gas component in the resin as a foaming agent of a liquid state:

$$Ts1 < Tm < Ts1 + 150 \text{ °C}.$$

2. A tire/rim assembly according to claim 1, wherein the coating is provided on a full surface of the hollow particle (4).

3. A tire/rim assembly according to any of claims 1 to 2, wherein the fixation ratio of the coating is not less than 90 mass%, which is determined based on an amount of the coating used for covering the hollow particles (4) and an amount of precipitates obtained by the following process according to the following equation:

$$\text{fixation ratio} = \{(\text{amount of the coating used}) - (\text{amount of the precipitates})\}/(\text{amount of the coating used}) \times 100;$$

and wherein the amount of the precipitates is determined by the following method:

to a separating funnel are added 300 cc of at least one kind of solvent selected from n-hexane, isopropyl alcohol, ethanol and methanol and the hollow particles with the coating weighed within a range of 2-3 g and agitated at room temperature for 1 minute and left at rest for 10 minutes to collect precipitates from the funnel, and thereafter the above-mentioned solvent is added again to adjust the amount of the solvent in the separating funnel to 300 cc, and then the above-mentioned agitation, leaving at rest and collection are repeated four times, and precipitate component resulting from five times of the above process is measured as an amount of precipitates after removing the solvent by a usual manner, from which is calculated mass percentage with respect to the original amount of the hollow particles to obtain the amount of precipitates.

4. A tire/rim assembly according to claim 3, wherein the fixation ratio of the coating is not less than 95 mass%.

5. A tire/rim assembly according to claim 3 or 4, wherein the fixation ratio of the coating is not less than 99 mass%.

6. A tire/rim assembly according to any one of claims 1 to 5, wherein a melting point Tm of the coating is higher than the expansion starting temperature Ts2 of the hollow particles.

7. A tire/rim assembly according to claim 1, wherein the hollow particles (4) are obtained by expanding the expandable resin particles covered with the coating at a temperature above the melting point Tm of the coating.

8. A tire/rim assembly according to any one of claims 1 to 7, wherein the coating is a metal salt of an organic acid.

9. A tire/rim assembly according to any one of claims 1 to 8, wherein a gas in the hollow particle (4) before arranged in the tire is different from a gas filled in the tire chamber (3).

10. A tire/rim assembly according to claim 9, wherein the gas in the hollow particle (4) before arranged in the tire (1) is incombustible gas and a gas inside the hollow particles (4) in the tire/rim assembly after an application of an internal pressure is a mixture of the incombustible gas and the gas filled in the tire chamber (3).

11. A tire/rim assembly according to claim 10, wherein the incombustible gas is at least one gas selected from the group consisting of straight and branched aliphatic hydrocarbons having a carbon number of 2 to 8 and fluorides thereof, an alicyclic hydrocarbon having a carbon number of 2 to 8 and a fluoride thereof, and an ether compound represented by the following general formula (III):

$$R^1\text{-O-}R^2 \qquad \text{(III)}$$

(wherein $R^1$ and $R^2$ are independently a monovalent hydrocarbon group having a carbon number of 1 to 5, provided that a part of hydrogen atoms in the hydrocarbon group may be substituted with fluorine atom).

12. A tire/rim assembly according to any one of claims 1 to 11 wherein the pressure in the hollow part of the hollow particles (4) is not less than 70 % of a tire internal pressure specified by a vehicle in normal traveling use.

13. A tire/rim assembly according to any one of claims 1 to 12, wherein the continuous phase of the resin constituting a shell part of the hollow particle (4) is an acrylonitrile-base resin.

14. A tire/rim assembly according to claim 13, wherein the acrylonitrile-base resin is a copolymer comprising at least three kinds of monomers of acrylonitrile, methacrylonitrile and methyl methacrylate, or a copolymer comprising at least three kinds of monomers of acrylonitrile, methacrylonitrile and methacrylic acid.

15. A tire/rim assembly according to any one of claims 1 to 14, wherein the pressure in the hollow part of the hollow particles (4) is not less than an internal pressure of a tire specified by a vehicle in normal traveling use.

16. A tire/rim assembly according to any one of claims 1 to 15, wherein an average particle diameter of a group of the hollow particles (4) arranged in the tire chamber (3) is within a range of 40-200 μm and an average true specific gravity of the group of the hollow particles (4) is within a range of 0.01-0.06 g/cm$^3$.

17. A tire/rim assembly according to any one of claims 1 to 16, which further comprises a pressure dropping alarm function of the tire chamber (3) based on a vehicle speed detection by a wheel speed sensor in an anti-lock braking system and/or a pressure dropping alarm function of the tire chamber (3) based on a system for directly measuring the pressure of the tire chamber (3) through a pressure sensor.

18. A tire/rim assembly according to any one of claims 1 to 17, wherein a number of foamed bodies having an average bulk specific gravity under an atmospheric pressure larger than the average true specific gravity of the hollow particles are arranged in the tire chamber at a mixed state with the group of the hollow particles.

19. A tire/rim assembly according to claim 18, wherein the foamed body has substantially a spherical shape having a diameter of 1 to 15 mm or a cubic shape having a side of 1 to 15 mm and has an average specific gravity of 0.06 to 0.3 g/cc and have an closed or open cell(s).

20. A hollow particle (4) consisting of a continuous phase of a thermally expandable resin and a closed cell(s), wherein the pressure in the hollow part of the hollow particle (4) is not less than the atmospheric pressure and wherein the hollow particle (4) is obtainable by fixing a coating to at least a part of a surface of the hollow particle (4) by heating, **characterized in that**
the melting point Tm of the coating satisfies the following relation with respect to an expansion starting temperature Ts1 of the expandable resin particles obtained by sealing a gas component in the resin as a foaming agent of a liquid state:

$$Ts1 < Tm < Ts1 + 150 \text{ °C.}$$

21. A hollow particle (4) according to claim 20, wherein the coating is provided on the full surface.

22. A hollow particle(4) according to claim 20 or 21, wherein the fixation ratio of the coating is not less than 90 mass%, which is determined based on an amount of the coating used for covering the hollow particles and an amount of precipitate obtained by the following process according to the following equation:

$$\text{fixation ratio} = \{(\text{amount of the coating used}) - (\text{amount of the precipitate})\}/(\text{amount of the coating used}) \times 100;$$

and wherein the amount of the precipitates is determined by the following method:

to a separating funnel are added 300 cc of at least one kind of solvent selected from n-hexane, isopropyl alcohol, ethanol and methanol and the hollow particles with the coating weighed within a range of 2-3 g and agitated at room temperature for 1 minute and left at rest for 10 minutes to collect precipitates from the funnel, and thereafter the above-mentioned solvent is added again to adjust the amount of the solvent in the separating funnel to 300 cc, and then the above-mentioned agitation, leaving at rest and collection are repeated four times, and precipitate component resulting from five times of the above process is measured as an amount of precipitate after removing the solvent by a usual manner, from which is calculated mass percentage with respect to the original amount of the hollow particles to obtain the amount of precipitate.

**23.** A hollow particle (4) according to claim 22, wherein the fixation ratio of the coating is not less than 95 mass%.

**24.** A hollow particle (4) according to claim 22 or 23, wherein the amount of precipitates is not less than 99 mass% of the original amount of the hollow particles.


**Patentansprüche**

**1.** Reifen-/Felgenanordnung, die durch Aufbringen eines Reifens (1) auf eine Felge (2), Anordnen einer Anzahl hohler Teilchen (4), von denen jedes aus einer kontinuierlichen Phase eines wärmeexpandierbaren Harzes und einer geschlossenen Zelle/geschlossenen Zellen in einem Reifenhohlraum (3) besteht, der von dem Reifen (1) und der Felge (2) definiert wird, und des Weiteren Einfüllen eines Hochdruckgases, das einen Luftdruck im Reifenhohlraum (3) übersteigt, konstruiert wird, wobei die hohlen Teilchen (4) durch Befestigen einer Beschichtung auf mindestens einem Teil der Oberfläche der hohlen Teilchen durch Erhitzen erhältlich sind, **dadurch gekennzeichnet, dass** der Schmelzpunkt Tm der Beschichtung dem folgenden Verhältnis mit Bezug auf eine Expansionsausgangstemperatur Ts1 der expandierbaren Harzteilchen entspricht, die durch Versiegeln einer Gaskomponente in dem Harz als Schäumungsmittel in einem flüssigen Zustand erhalten werden:

$$Ts1 < Tm < Ts1 + 150°C$$

**2.** Reifen-/Felgenanordnung nach Anspruch 1, wobei die Beschichtung auf einer vollen Oberfläche des hohlen Teilchens (4) bereitgestellt wird.

**3.** Reifen-/Felgenanordnung nach einem der Ansprüche 1 bis 2, wobei das Befestigungsverhältnis der Beschichtung nicht weniger als 90 Masse-% beträgt, die auf der Basis einer Menge der Beschichtung, die zum Bedecken der hohlen Teilchen (4) verwendet wird, und einer Menge von Ausfällungen, die durch das folgende Verfahren erhalten werden, der folgenden Gleichung gemäß bestimmt werden:

$$\text{Befestigungsverhältnis} = \{(\text{Menge der verwendeten Beschichtung}) - (\text{Menge der Ausfällungen})\}/(\text{Menge der verwendeten Beschichtung}) \times 100;$$

und wobei die Menge der Ausfällungen durch das folgende Verfahren bestimmt wird:

in einen Trennungstrichter werden 300 cm$^3$ mindestens einer Art Lösungsmittel ausgewählt unter n-Hexan, Isopropylalkohol, Ethanol und Methanol und die hohlen Teilchen mit der Beschichtung, innerhalb eines Bereichs von 2-3 g gewogen, eingegeben und bei Raumtemperatur 1 Minute lang bewegt und 10 Minuten lang ruhen gelassen, um Ausfällungen aus dem Trichter aufzufangen, und daraufhin wird das oben erwähnte Lösungsmittel nochmals zugegeben, um die Menge des Lösungsmittels in dem Trennungstrichter auf 300 cm$^3$ einzustellen, und dann werden das oben erwähnte Bewegen, Ruhenlassen und Auffangen viermal wiederholt, und die aus fünfmal dem obigen Vorgang erhaltene Ausfällungskomponente wird als Menge an Ausfällungen nach Entfernen des Lösungsmittels auf gewöhnliche Weise gemessen, woraus der Masseprozentsatz mit Bezug auf die ursprüngliche Menge der hohlen Teilchen berechnet wird, um die Menge an Ausfällungen zu erhalten.

**4.** Reifen-/Felgenanordnung nach Anspruch 3, wobei das Befestigungsverhältnis der Beschichtung nicht weniger als 95 Masse-% beträgt.

**5.** Reifen-/Felgenanordnung nach Anspruch 3 oder 4, wobei das Befestigungsverhältnis der Beschichtung nicht weniger als 99 Masse-% beträgt.

**6.** Reifen-/Felgenanordnung nach einem der Ansprüche 1 bis 5, wobei ein Schmelzpunkt Tm der Beschichtung höher als die Expansionsausgangstemperatur Ts2 der hohlen Teilchen ist.

7. Reifen-/Felgenanordnung nach Anspruch 1, wobei die hohlen Teilchen (4) durch Expandieren der expandierbaren Harzteilchen, die mit der Beschichtung bedeckt sind, bei einer Temperatur über den Schmelzpunkt Tm der Beschichtung erhalten werden.

8. Reifen-/Felgenanordnung nach einem der Ansprüche 1 bis 7, wobei die Beschichtung ein Metallsalz einer organischen Säure ist.

9. Reifen-/Felgenanordnung nach einem der Ansprüche 1 bis 8, wobei ein Gas in dem hohlen Teilchen (4) vor Anordnen im Reifen von einem in den Reifenhohlraum (3) eingefüllten Gas verschieden ist.

10. Reifen-/Felgenanordnung nach Anspruch 9, wobei das Gas in dem hohlen Teilchen (4) vor Anordnung im Reifen (1) nicht brennbares Gas ist und ein Gas innerhalb der hohlen Teilchen (4) in der Reifen-/Felgenanordnung nach dem Aufbringen eines Innendrucks eine Mischung des nicht brennbaren Gases und des in den Reifenhohlraum (3) eingefüllten Gases ist.

11. Reifen-/Felgenanordnung nach Anspruch 10, wobei das nicht brennbare Gas mindestens ein Gas ist ausgewählt aus der Gruppe bestehend aus geradkettigen und verzweigten aliphatischen Kohlenwasserstoffen, die eine Kohlenstoffzahl von 2 bis 8 aufweisen, und Fluoriden davon, einem alicyclischen Kohlenwasserstoff, der eine Kohlenstoffzahl von 2 bis 8 aufweist, und einem Fluorid davon und einer Etherverbindung, die durch die folgende allgemeine Formel (III):

$$R^1\text{-}O\text{-}R^2 \qquad (III)$$

dargestellt ist, besteht (wobei $R^1$ und $R^2$ unabhängig eine einwertige Kohlenwasserstoffgruppe sind, die eine Kohlenstoffzahl von 1 bis 5 aufweist, vorausgesetzt, dass ein Teil von Wasserstoffatomen in der Kohlenwasserstoffgruppe durch ein Fluoratom substituiert sein kann.

12. Reifen-/Felgenanordnung nach einem der Ansprüche 1 bis 11, wobei der Druck in dem hohlen Teil der hohlen Teilchen (4) nicht weniger als 70 % eines Reifeninnendrucks, der für ein Fahrzeug bei normaler Fahrverwendung spezifiziert ist, beträgt.

13. Reifen-/Felgenanordnung nach einem der Ansprüche 1 bis 12, wobei die kontinuierliche Phase des Harzes, das einen Mantelteil des hohlen Teilchens (4) darstellt, ein Harz auf Acrylnitrilbasis ist.

14. Reifen-/Felgenanordnung nach Anspruch 13, wobei das Harz auf Acrylnitrilbasis ein Copolymer umfassend mindestens drei Arten von Monomeren von Acrylnitril, Methacrylnitril und Methylmethacrylat oder ein Copolymer umfassend mindestens drei Arten von Monomeren von Acrylnitril, Methacrylnitril und Methacrylsäure ist.

15. Reifen-/Felgenanordnung nach einem der Ansprüche 1 bis 14, wobei der Druck im hohlen Teil der hohlen Teilchen (4) nicht geringer als ein Innendruck eines Reifens, der für ein Fahrzeug bei normaler Fahrverwendung spezifiziert ist, ist.

16. Reifen-/Felgenanordnung nach einem der Ansprüche 1 bis 15, wobei ein durchschnittlicher Teilchendurchmesser einer Gruppe der hohlen Teilchen (4), die in dem Reifenhohlraum (3) angeordnet sind, innerhalb eines Bereichs von 40-200 $\mu$m liegt und eine durchschnittliche echte relative Dichte der Gruppe der hohlen Teilchen (4) innerhalb eines Bereichs von 0,01-0,06 g/ $cm^3$ liegt.

17. Reifen-/Felgenanordnung nach einem der Ansprüche 1 bis 16, die des Weiteren eine Druckabfallalarmfunktion des Reifenhohlraums (3) auf der Basis einer Fahrzeuggeschwindigkeitserfassung durch einen Radgeschwindigkeitssensor in einem Antiblockiersystem und/oder eine Druckabfallalarmfunktion des Reifenhohlraums (3) auf der Basis eines Systems zum direkten Messen des Drucks des Reifenhohlraums (3) durch einen Drucksensor umfasst.

18. Reifen-/Felgenanordnung nach einem der Ansprüche 1 bis 17, wobei eine Anzahl von geschäumten Körpern, die eine durchschnittliche spezifische Schüttdichte unter einem Luftdruck von mehr als der durchschnittlichen echten relativen Dichte der hohlen Teilchen aufweisen, in dem Reifenhohlraum in einem gemischten Zustand mit der Gruppe der hohlen Teilchen angeordnet sind.

**19.** Reifen-/Felgenanordnung nach Anspruch 18, wobei der geschäumte Körper eine im Wesentlichen kugelförmige Gestalt mit einem Durchmesser von 1 bis 15 mm oder eine würfelförmige Gestalt mit einer Seite von 1 bis 15 mm aufweist und eine durchschnittliche relative Dichte von 0,06 bis 0,3 g/cm$^3$ und eine geschlossene oder offene Zelle/geschlossene oder offene Zellen aufweist.

**20.** Hohles Teilchen (4) bestehend aus einer kontinuierlichen Phase eines wärmeexpandierbaren Harzes und einer geschlossenen Zelle/geschlossenen Zellen, wobei der Druck in dem hohlen Teil des hohlen Teilchens (4) nicht geringer als der Luftdruck ist und wobei das hohle Teilchen (4) durch Befestigen einer Beschichtung an mindestens einem Teil einer Oberfläche des hohlen Teilchens (4) durch Erhitzen erhältlich ist, **dadurch gekennzeichnet, dass** der Schmelzpunkt Tm der Beschichtung dem folgenden Verhältnis mit Bezug auf eine Expansionsausgangstemperatur Ts1 der expandierbaren Harzteilchen entspricht, die durch Versiegeln einer Gaskomponente in dem Harz als Schäumungsmittel im flüssigen Zustand erhalten werden:

$$Ts1 < Tm < Ts1 + 150°C$$

**21.** Hohles Teilchen (4) nach Anspruch 20, wobei die Beschichtung auf der vollen Oberfläche bereitgestellt wird.

**22.** Hohles Teilchen (4) nach Anspruch 20 oder 21, wobei das Befestigungsverhältnis der Beschichtung nicht weniger als 90 Masse-% beträgt, das auf der Basis einer Menge der Beschichtung, die zum Bedecken der hohlen Teilchen (4) verwendet wird, und einer Menge von Ausfällungen, die durch das folgende Verfahren erhalten wird, der folgenden Gleichung gemäß bestimmt werden:

$$\text{Befestigungsverhältnis} = \{(\text{Menge der verwendeten Beschichtung}) - (\text{Menge der Ausfällungen})\}/(\text{Menge der verwendeten Beschichtung}) \times 100;$$

und wobei die Menge der Ausfällungen durch das folgende Verfahren bestimmt wird:

in einen Trennungstrichter werden 300 cm$^3$ mindestens einer Art Lösungsmittel ausgewählt unter n-Hexan, Isopropylalkohol, Ethanol und Methanol und die hohlen Teilchen mit der Beschichtung, innerhalb eines Bereichs von 2-3 g gewogen, eingegeben und bei Raumtemperatur 1 Minute lang bewegt und 10 Minuten lang ruhen gelassen, um Ausfällungen aus dem Trichter aufzufangen, und daraufhin wird das oben erwähnte Lösungsmittel nochmals zugegeben, um die Menge des Lösungsmittels in dem Trennungstrichter auf 300 cm$^3$ einzustellen, und dann werden das oben erwähnte Bewegen, Ruhenlassen und Auffangen viermal wiederholt, und die aus fünfmal dem obigen Vorgang erhaltene Ausfällungskomponente wird als Menge an Ausfällungen nach Entfernen des Lösungsmittels auf gewöhnliche Weise gemessen, woraus der Masseprozentsatz mit Bezug auf die ursprüngliche Menge der hohlen Teilchen berechnet wird, um die Menge an Ausfällungen zu erhalten.

**23.** Hohles Teilchen (4) nach Anspruch 22, wobei das Befestigungsverhältnis der Beschichtung nicht weniger als 95 Masse-% beträgt.

**24.** Hohles Teilchen (4) nach Anspruch 22 oder 23, wobei die Menge an Ausfällungen nicht weniger als 99 Masse-% der ursprünglichen Menge der hohlen Teilchen beträgt.

## Revendications

**1.** Assemblage de pneumatique/jante construit en assemblant un pneumatique (1) sur une jante (2), en disposant un certain nombre de particules creuses (4) constituées chacune d'une phase continue d'une résine thermiquement extensible et d'alvéole(s) fermée(s) dans une chambre pneumatique (3) définie par le pneumatique (1) et la jante (2) et en remplissant de manière supplémentaire un gaz à haute pression supérieure à une pression atmosphérique dans la chambre de pneumatique (3), dans lequel les particules creuses (4) peuvent être obtenues en fixant un revêtement à au moins une partie de la surface des particules creuses par chauffage, **caractérisé en ce que** le point de fusion Tm du revêtement satisfait la relation suivante par rapport à une température de démarrage de l'expansion Ts1 des particules de résine expansibles obtenues par enfermement d'un composant gazeux dans la résine comme agent d'expansion sous un état liquide :

$$Ts1 < Tm < Ts1 + 150\ °C.$$

2. Assemblage de pneumatique/jante selon la revendication 1, dans lequel le revêtement est fourni sur une surface complète de la particule creuse (4).

3. Assemblage de pneumatique/jante selon l'une quelconque des revendications 1 à 2, dans lequel le rapport de fixation du revêtement n'est pas inférieur à 90 % en masse, qui est déterminé sur la base d'une quantité du revêtement utilisé pour recouvrir les particules creuses (4) et une quantité de précipités obtenue par le procédé suivant selon l'équation suivante :

rapport de fixation = {(quantité du revêtement utilisé) - (quantité des précipités)}/(quantité du revêtement utilisé) x 100 ;

et dans lequel la quantité des précipités est déterminée par le procédé suivant :

à une ampoule de décantation sont ajoutés 300 cc d'au moins un type de solvant sélectionné parmi le n-hexane, l'alcool d'isopropyle, l'éthanol et le méthanol et les particules creuses avec le revêtement pesé à l'intérieur d'une plage de 2 à 3 g et agités à la température ambiante durant 1 minute et laissés au repos durant 10 minutes pour recueillir les précipités de l'ampoule, et par la suite le solvant ci-dessus mentionné est ajouté à nouveau pour ajuster la quantité de solvant dans l'ampoule de décantation à 300 cc, et ensuite l'agitation, la mise au repos et le recueil ci-dessus mentionnés sont répétés quatre fois, et le composant précipité résultant des cinq répétitions du procédé ci-dessus est mesuré comme une quantité des précipités après élimination du solvant d'une manière usuelle, à partir de laquelle est calculé le pourcentage en masse par rapport à la quantité d'origine des particules creuses pour obtenir la quantité des précipités.

4. Assemblage de pneumatique/jante selon la revendication 3, dans lequel le rapport de fixation du revêtement n'est pas inférieur à 95 % en masse.

5. Assemblage de pneumatique/jante selon la revendication 3 ou 4, dans lequel le rapport de fixation du revêtement n'est pas inférieur à 99 % en masse.

6. Assemblage de pneumatique/jante selon l'une quelconque des revendications 1 à 5 dans lequel un point de fusion Tm du revêtement est supérieur à la température de démarrage de l'expansion Ts2 des particules creuses.

7. Assemblage de pneumatique/jante selon la revendication 1, dans lequel les particules creuses (4) sont obtenues par l'expansion des particules de résine expansibles recouvertes du revêtement à une température située au-dessus du point de fusion Tm du revêtement.

8. Assemblage selon l'une quelconque des revendications 1 à 7, dans lequel le revêtement est un sel métallique d'un acide organique.

9. Assemblage de pneumatique/jante selon l'une quelconque des revendications 1 à 8, dans lequel un gaz dans la particule creuse (4) avant d'être disposé dans le pneumatique est différent d'un gaz chargé dans la chambre du pneumatique (3).

10. Assemblage de pneumatique/jante selon la revendication 9, dans lequel le gaz dans la particule creuse (4) avant d'être disposé dans le pneumatique (1) est un gaz non combustible et un gaz à l'intérieur des particules creuses (4) dans l'assemblage de pneumatique/jante après une application d'une pression interne est un mélange du gaz non combustible et du gaz chargé dans la chambre de pneumatique (3).

11. Assemblage de pneumatique/jante selon la revendication 10, dans lequel le gaz non combustible est au moins un gaz sélectionné parmi le groupe constitué des hydrocarbures aliphatiques linéaires et ramifiés ayant un nombre d'atomes de carbone de 2 à 8 et leurs fluorures, d'un hydrocarbure alicyclique ayant un nombre d'atomes de carbone de 2 à 8 et d'un fluorure de celui-ci, et d'un composé éther représenté par la formule générale suivante (III) :

$$R^1\text{-}O\text{-}R^2 \qquad (III)$$

(dans laquelle $R^1$ et $R^2$ sont indépendamment un groupe hydrocarbure monovalent ayant un nombre d'atomes de carbone de 1 à 5, à condition qu'une partie des atomes d'hydrogène dans le groupe hydrocarbure puisse être substituée par un atome de fluor).

12. Assemblage de pneumatique/jante selon l'une quelconque des revendications 1 à 11 dans lequel la pression dans la partie creuse des particules creuses (4) n'est pas inférieure à 70 % d'une pression interne de pneumatique spécifiée par un véhicule en utilisation de déplacement normale.

13. Assemblage de pneumatique/jante selon l'une quelconque des revendications 1 à 12, dans lequel la phase continue de la résine constituant une partie formant enveloppe de la particule creuse (4) est une résine à base d'acrylonitrile.

14. Assemblage de pneumatique/jante selon la revendication 13, dans lequel la résine à base d'acrylonitrile est un copolymère comprenant au moins trois types de monomères d'acrylonitrile, de méthacrylonitrile et de méthacrylate de méthyle, ou un copolymère comprenant au moins trois types de monomères d'acrylonitrile, de méthacrylonitrile et d'acide méthacrylique.

15. Assemblage de pneumatique/jante selon l'une quelconque des revendications 1 à 14, dans lequel la pression dans la partie creuse des particules creuses (4) n'est pas inférieure à une pression interne d'un pneumatique spécifiée par un véhicule en utilisation de déplacement normale.

16. Assemblage de pneumatique/jante selon l'une quelconque des revendications 1 à 15, dans lequel un diamètre moyen de particule d'un groupe des particules creuses (4) disposé dans la chambre de pneumatique (3) se situe dans une plage de 40 à 200 $\mu$m et une densité relative réelle moyenne du groupe des particules creuses (4) se situe à l'intérieur d'une plage de 0,01 à 0,06 g/cm$^3$.

17. Assemblage de pneumatique/jante selon l'une quelconque des revendications 1 à 16, qui comprend en outre une fonction d'alarme de chute de pression de la chambre de pneumatique (3) sur la base d'une détection de vitesse du véhicule par un capteur de vitesse de roue dans un système de freinage antiblocage et/ou une fonction d'alarme de chute de pression de la chambre de pneumatique (3) sur la base d'un système permettant de mesurer directement la pression de la chambre de pneumatique (3) à travers un capteur de pression.

18. Assemblage de pneumatique/jante selon l'une quelconque des revendications 1 à 17, dans lequel un certain nombre de corps alvéolaires ayant une densité apparente moyenne sous une pression atmosphérique supérieure à la densité relative moyenne des particules creuses sont disposés dans la chambre de pneumatique en un état mixte avec le groupe des particules creuses.

19. Assemblage de pneumatique/jante selon la revendication 18, dans lequel le corps alvéolaire a une forme substantiellement sphérique ayant un diamètre de 1 à 15 mm ou une forme cubique ayant un côté de 1 à 15 mm et une densité relative moyenne de 0,06 à 0,3 g/cc et a une (des) alvéole(s) fermée(s) ou ouverte(s).

20. Particule creuse (4) constituée d'une phase continue d'une résine thermiquement expansible et d'alvéole(s) fermée (s), dans laquelle la pression dans la particule creuse de la particule creuse (4) n'est pas inférieure à la pression atmosphérique et dans laquelle la particule creuse (4) peut être obtenue en fixant un revêtement à au moins une partie d'une surface de la particule creuse (4) par chauffage, **caractérisée en ce que** :

le point de fusion Tm du revêtement satisfait la relation suivante par rapport à une température de démarrage de l'expansion Ts1 des particules de résine expansibles obtenues par enfermement d'un composant gazeux dans la résine comme agent d'expansion d'un état liquide :

$$\text{Ts1} < \text{Tm} < \text{Ts1} + 150°C$$

**21.** Particule creuse (4) selon la revendication 20, dans laquelle le revêtement est proposé sur la surface entière.

**22.** Particule creuse (4) selon la revendication 20 ou 21, dans laquelle le rapport de fixation du revêtement n'est pas inférieur à 90 % en masse, qui est déterminé sur la base d'une quantité du revêtement utilisé pour recouvrir les particules creuses et d'une quantité de précipités obtenue par le procédé suivant selon l'équation suivante :

$$\text{rapport de fixation} = \{(\text{quantité du revêtement utilisé}) - (\text{quantité des précipités})\}/(\text{quantité du revêtement utilisé}) \times 100 \ ;$$

et dans laquelle la quantité des précipités est déterminée par le procédé suivant :

à une ampoule de décantation sont ajoutés 300 cc d'au moins un type de solvant sélectionné parmi le n-hexane, l'alcool d'isopropyle, l'éthanol et le méthanol et les particules creuses avec le revêtement pesé à l'intérieur d'une plage de 2 à 3 g et agités à la température ambiante durant 1 minute et laissés au repos durant 10 minutes pour recueillir les précipités de l'ampoule, et par la suite le solvant ci-dessus mentionné est ajouté à nouveau pour ajuster la quantité de solvant dans l'ampoule de décantation à 300 cc, et ensuite l'agitation, la mise au repos et le recueil ci-dessus mentionnés sont répétés quatre fois, et le composant précipité résultant des cinq répétitions du procédé ci-dessus est mesuré comme une quantité des précipités après élimination du solvant d'une manière usuelle, à partir de laquelle est calculé le pourcentage en masse par rapport à la quantité d'origine des particules creuses pour obtenir la quantité des précipités.

**23.** Particule creuse (4) selon la revendication 22, dans laquelle le rapport de fixation du revêtement n'est pas inférieur à 95 % en masse.

**24.** Particule creuse (4) selon la revendication 22 ou 23, dans laquelle la quantité de précipités n'est pas inférieure à 99 % en masse de la quantité d'origine des particules creuses.

EP 1 870 256 B1

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003118312 A
- JP 2003306006 A
- JP 2004255981 A
- JP 2004243985 A
- JP 2005035545 A
- EP 1375197 A